# EUROPÄISCHE PATENTSCHRIFT

(11) **EP 1 682 622 B1**
(45) Veröffentlichungstag und Bekanntmachung des Hinweises auf die Patenterteilung: **22.08.2007**
(21) Anmeldenummer: 05774029.2
(22) Anmeldetag: 19.08.2005
(51) Int. Cl.: C09C 1/00

(54) **MIT SiO2 UND CEROXID BESCHICHTETE PERLGLANZPIGMENTE**
PEARLESCENT PIGMENTS COATED WITH SiO2 AND CERIUM OXIDE
PIGMENTS NACRES PRESENTANT UN REVETEMENT DE SiO2 ET D'OXYDE DE CERIUM

(30) Priorität: 26.08.2004 DE 102004041586
(43) Veröffentlichungstag der Anmeldung: 26.07.2006
(73) Patentinhaber: Eckart GmbH & Co. KG, 90763 Fürth (DE)
(72) Erfinder: HENGLEIN, Frank, 90409 Nürnberg (DE); SCHMIDT, Ulrich, 91217 Hersbruck (DE); KRÜGER, Peter, 91207 Lauf an der Pegnitz (DE); KAUPP, Günter, Dr., 91284 Neuhaus (DE)
(74) Vertreter: LOUIS, PÖHLAU, LOHRENTZ
(86) Internationale Anmeldenummer: PCT/EP2005/009006
(87) Internationale Veröffentlichungsnummer: WO 2006/021386

(56) Entgegenhaltungen:
- EP-A- 0 632 109
- EP-A- 0 888 410
- WO-A-20/05063897
- US-A- 5 759 255
- US-A1- 2002 112 645
- US-B1- 6 176 918

## Beschreibung

Die Erfindung betrifft Perlglanzpigmente mit Metalloxid-haltigem, plättchenförmigen Substrat mit einer ersten und einer zweiten Schutzschicht, wobei das Metalloxid einen Brechungsindex von größer als 1,8 hat. Des weiteren betrifft die Erfindung ein Verfahren zur Herstellung solcher Perlglanzpigmente als auch die Verwendung derselben.

Perlglanzpigmente, die Titandioxid in der Deckschicht enthalten bzw. die aus partikelförmigem TiO₂ aufgebaut sind, besitzen eine gewisse photokatalytische Aktivität. Wirkt nun UV-Licht in Gegenwart von Wasser und Sauerstoff auf ein Perlglanzpigment ein, so kann die UV-Aktivität des Perlglanzpigments einen beschleunigten Abbau von organischen Verbindungen, z. B. einer Bindemittelmatrix, auslösen. Bereits der im Tageslicht enthaltene UV-Anteil kann diese Reaktion bedingen, d.h. für Applikationen wie Automobillackierungen, die der Witterung direkt ausgesetzt sind, müssen besonders stabilisierte Perlglanzpigmente eingesetzt werden. Um diesen für die Außenanwendung nachteiligen Effekt entgegenzuwirken, können Perlglanzpigmente zur Verminderung der Photoaktivität mit verschiedenen Schutzbeschichtungen ausgestattet werden.

In der EP 0 141 174 werden Perlglanzpigmente mit verbesserter Witterungsbeständigkeit beschrieben, die eine Schutzbeschichtung aufweisen, die im wesentlichen aus einer Seltenerdmetallverbindung - z.B. Cer - und einem Polysiloxan besteht. Außerdem können in der Schutzbeschichtung, die in einer wässriger Suspension erfolgt, Zink- bzw. Aluminiumsalze oder auch Silikat enthalten sein. Die Beschichtung selbst erfolgt in wässriger Suspension und das Produkt wird nach der Isolierung getrocknet.

Die EP 0 342 533 offenbart mit Zirkoniumoxid belegte Pigmente, auf die eine aus einem hydratisiertem Metalloxid von Kobalt, Mangan oder Cer bestehende Schicht aufgebracht werden kann. Das so behandelte Pigment soll jetzt zwar in nichtwässrigen Lacksysteme gut einsetzbar sein, für wasserverdünnbare Lacke ist es aber gemäß der EP 632109 nach wie vor ungeeignet, da hier die Bildung von mikrofeinen Bläschen im Lackfilm verursacht wird.

Gemäß der Lehre der EP 0 632 109 wird eine dreischichtige Schutzschicht auf ein mit Metalloxiden belegtes plättchenförmiges Substrat aufgebracht. In einer 1. Stufe wird SiO₂, in einer 2. Stufe wird ein Hydroxid oder Oxid-Hydrat von Cer, Aluminium oder Zirkonium und in einer 3. Stufe werden mindestens ein Hydroxid oder Oxid-Hydrat von Cer, Aluminium oder Zirkonium sowie ein organisches Kupplungsreagenz aufgebracht. Darüber hinaus müssen die Kupplungsreagenzien vor der Bindung an die Pigmentoberfläche hydrolysiert werden, wobei gemäß der Lehre der EP 0 888 410 B1 nur maximal 60 % der zugesetzten Kupplungsreagenzien an die Pigmentoberfläche gebunden werden können.

Die EP 0 888 410 B1 offenbart modifizierte Perlglanzpigmente auf der Basis eines mit Metalloxiden beschichteten, plättchenförmigen Substrates. Gemäß der Lehre der EP 0 888 410 B1 besteht die Deckschicht aus mindestens zwei Oxiden, gemischten Oxiden oder Mischoxiden von Siliziumdioxid, Aluminiumoxid, Ceroxid, Titanoxid oder Zirkoniumoxid und einem wasserbasierenden oligomeren Silansystem. Es sind keine Untersuchungen zum Einfluss der Reihenfolge der oxydischen Schutzschichten hinsichtlich ihrer Wirksamkeit auf die UV-Stabilität des Perlglanzpigmentes offenbart. Daher ist auch kein optimaler Schutzschichtaufbau beschrieben. Weiterhin kann das wasserbasierende oligomere Silansystem nur hydrophobe Anteile bis maximal acht C-Atome enthalten, da andernfalls seine Wasserlöslichkeit nicht gegeben ist. Daher ist hier die Variationsmöglichkeit der Nachbeschichtung begrenzt.

Gegenstand der EP 0 649 886 sind Perlglanzpigmente mit Titandioxid- oder Eisenoxidbeschichtung, die in wässriger Phase mit einer Kombination aus Cer- und Aluminiumoxidhydraten nachbeschichtet und anschließend getrocknet werden.

Gemäß der Lehre der EP 1 203 795 kann ein Perlglanzpigment einen Schichtaufbau, der in einer ersten Schicht Oxidhydrate des Siliziums oder Aluminiums enthält und in einer nachfolgenden zweiten Schicht Oxidhydrate des Siliziums, Aluminiums, Zirkoniums oder Cers enthält, umfassen, wobei die Zusammensetzung der 1. Schicht von der der 2. Schicht verschieden ist. Das Perlglanzpigment weist ferner eine dritte Schicht aus mindestens einem organischen hydrophoben Kupplungsreagenz auf, wobei das organische hydrophobe Kupplungsreagenz nicht mit dem Bindemittel beispielsweise eines Lacksystems reagiert.

Bei den meisten der im Stand der Technik verwendeten Verfahren wird SiO₂ und/oder Aluminiumoxid als erste Schicht aufgebracht. Eine Ceroxidschicht wird meist im Anschluss daran oder als Mischoxidfällung zusammen mit weiteren Komponenten aufgebracht. Die Anbindung der Silane erfolgt dann in der Regel in einer Mischfällung mit der Fällung der Metallhydroxide in wässriger Lösung. Aufgrund der Mischfällung der Hydroxide und des Silansystems ist die Effizienz der Oberflächenbelegung mit dem oligomeren Silansystem gering. Folglich werden unverhältnismäßig große Mengen der teuren Silane eingesetzt, was die Rohstoffkosten unnötig erhöht.
In der EP 1 084 198 B1 sind Effektpigmente beschrieben, die aufgrund ihrer Oberflächenmodifizierung mit reaktiven Orientierungsmitteln, sehr gute Haftfestigkeiten zum Basislack aufweisen. Die EP 1 084 198 B1 offenbart keine wetterstabilen Perlglanzpigmente.

Aufgabe der Erfindung ist es, Metalloxid-haltige Perlglanzpigmente mit einem einfach aufgebauten und gegenüber dem Stand der Technik in der Wirksamkeit verbesserten schützenden Schichtaufbau bereitzustellen. Der schützende Schichtaufbau soll insbesondere einen wirksamen Schutz gegenüber einer durch UV-Licht induzierten photokatalytischen Aktivität des Pigmentes geben, ohne die optischen Eigenschaften des Pigments wie Glanz wesentlich zu beeinträchtigen.

Weiterhin sollen die erfindungsgemäßen Perlglanzpigmente mit einer organisch-chemischen Nachbeschichtung versehen werden, die sehr gutes Orientierungsverhalten der Perlglanzpigmente im Lack bei gleichzeitiger hervorragender Anbindung an das Bindemittel (sehr gute Haftfestigkeit) ermöglicht. Die erfindungsgemäßen Perlglanzpigmente sollen generell eine verbesserte Wetterstabilität besitzen.

Eine weitere Aufgabe ist es, ein einfaches Verfahren zur Herstellung von Metalloxidhaltigen Perlglanzpigmenten mit einem einfachen und wirksam schützenden Schichtaufbau bereitzustellen. Weiterhin soll ein einfaches Verfahren zur effektiven Aufbringung der Nachbeschichtung, das eine große Variabilität bzgl. der verwendbaren Nachbeschichtungsreagenzien aufweist, gefunden werden.

Die der Erfindung zugrundeliegende Aufgabe wird durch Bereitstellung eines Perlglanzpigmentes mit Metalloxid-haltigem, plättchenförmigen Substrat, wobei das Metalloxid einen Brechungsindex von größer als 1,8 hat, mit einer ersten und einer zweiten Schutzschicht, gelöst. Auf dem plättchenförmigen Substrat ist eine erste Schutzschicht mit Ceroxid und/oder Ceroxid-Hydrat und/oder Cerhydroxid und eine zweite Schutzschicht aus SiO₂, auf die eine organisch-chemische Nachbeschichtung, umfassend wenigstens ein Silan mit wenigstens einer funktionellen Bindungsgruppe und wenigstens ein Silan ohne funktionelle Bindungsgruppe, aufgebracht. Bei einer erfindungsgemäßen Weiterbildung können zwischen der ersten und der zweiten Schutzschicht Metalloxidschichten, die verschieden von Ceroxid und/oder Ceroxid-Hydrat und/oder Cerhydroxid und SiO₂ sind, angeordnet sein.

Bevorzugte Weiterbildungen sind in den Unteransprüchen 2 bis 18 angegeben.

Erfindungsgemäß wird ein Perlglanzpigment, das eine verbesserte UV-Stabilität und eine optimierte Kompatibilität zu handelsüblichen Lacksystemen aufweist, als "wetterstabil" oder "witterungsstabil" bezeichnet.

Unter Metalloxid-haltigem, plättchenförmigen Substrat werden im Sinne der Erfindung insbesondere Metalloxid-haltige Perlglanzpigmente, beispielsweise mit Metalloxiden beschichtete Glimmerplättchen, verstanden.

Die Cer-haltige Schutzschicht umfaßt oder besteht aus Ceroxid und/oder Cerhydroxid und/oder Ceroxidhydrat. Die Cer-haltige Schicht wird durch Fällung von Cerhydroxid aufgebracht und geht durch Entwässerung, beispielsweise unter Wärmebeaufschlagung, teilweise oder vollständig in Ceroxid und/oder Ceroxidhydrat über. Somit kann die Schutzschicht, auch wenn nachfolgend von einer Ceroxidschicht gesprochen wird, neben Ceroxid auch Cerhydroxid und/oder Ceroxidhydrat enthalten.

Das eingesetzte Cer liegt in dreiwertiger oder in vierwertiger Form oder in Mischungen dieser beiden Formen vor. Vorzugsweise wird Cer in dreiwertiger Form eingesetzt.

Die organisch-chemische Nachbeschichtung liegt bevorzugt nicht als Mischschicht mit der SiO₂-Beschichtung vor. Das heißt, bei der Aufbringung der zweiten Schutzschicht wurde zunächst SiO₂ auf dem Effektpigment aufgebracht und nachfolgend die organisch-chemische Nachbeschichtung aufgebracht.

Die organisch-chemische Nachbeschichtung kann äußerst vorteilhaft in einfacher Weise durchgeführt werden und umfaßt eine große Vielfalt an Oberflächenmodifizierungsmitteln. Aufgrund der Vielzahl an verwendbaren Oberflächenmodifizierungsmitteln kann das erfindungsgemäße Pigment für verschiedenste Lacksysteme kompatibel gestaltet werden. Die optischen Eigenschaften wie Glanz sind sehr gut.

Das erfindungsgemäße Verfahren zur Bereitstellung des erfindungsgemäßen Perlglanzpigmentes umfasst folgende Schritte:
(a) Suspendieren von Metalloxid-haltigem, plättchenförmigen Substrat in einer Flüssigphase, wobei das Metalloxid einen Brechungsindex von größer als 1,8 hat,
(b) Aufbringen einer Schicht mit Ceroxid und/oder Ceroxid-Hydrat und/oder Cerhydroxid auf das plättchenförmige Substrat,
(c) optionales Aufbringen einer oder mehrerer Metalloxidschichten auf das in Schritt (b) beschichtete Pigment,
(d) Aufbringen einer SiO₂-Schicht auf das in Schritt (b) oder (c) beschichtete Pigment,
(e) Modifizieren der Oberfläche der SiO₂-Schicht mit einer Nachbeschichtung umfassend wenigstens ein Silan mit einer funktionellen Bindungsgruppe und wenigstens ein Silan ohne funktionelle Bindungsgruppe.

Bevorzugte Weiterbildungen des erfindungsgemäßen Verfahrens sind in den Ansprüchen 19 bis 30 angegeben.

Bevorzugt wird hierbei Schritt (e) mit einem oder mehreren organofunktionellen Silanen in einer Flüssigphase mit einem überwiegenden Anteil an organischem Lösemittel durchgeführt. Dabei ist es äußerst vorteilhaft, daß viele Additive, insbesondere hydrophobe Silane, in überwiegend organischen Lösemitteln sehr gut lösbar sind. Dadurch ist eine einfache Prozeßführung und eine große Variabilität in der Wahl der Oberflächenmodifizierungsmittel gegeben.

Überraschenderweise wurde nun gefunden, dass eine ausgezeichnete UV- und Wetterstabilität von Perlglanzpigmenten erreicht wird durch ein Perlglanzpigment mit Metalloxid-haltigem, plättchenförmigen Substrat, welches auf dem plättchenförmigem Substrat eine erste Schutzschicht umfassend eine vorzugsweise direkt auf dem plättchenförmigen Substrat aufgebrachte Schicht mit oder aus Ceroxid und/oder Ceroxid-Hydrat und/oder Cerhydroxid und im weiteren Schichtaufbau eine Schicht aus SiO₂, die eine organisch-chemische Nachbeschichtung besitzt, aufgebracht ist. Es hat sich ferner überraschend gezeigt, daß bereits dünne Schichtdicken für eine hohe UV-Stabilität ausreichend sind.

Trotz des niedrigen Brechungsindexes von SiO₂ weisen die Pigmente überraschenderweise einen sehr guten Glanz auf. Dies war keinesfalls zu erwarten, heißt es doch in der DE 4207723 A1, S. 2, Zeile 19-21: "Mit Silicat- bzw. mit Al₂O₃ beschichtete Pigmente sind schwer dispergierbar und weisen zusätzlich Glanzeinbußen in Druckfarben und Lackabstrichen auf."

Die Menge an eingesetztem Cer, vorzugsweise in Form von Ceroxid und/oder Ceroxid-Hydrat und/oder Cerhydroxid, liegt vorzugsweise zwischen 0,05 bis 3,0 Gew.-% Cer, weiter vorzugsweise zwischen 0,1 und 1,0 Gew.-% und bevorzugt zwischen 0,2 und 0,7 Gew.-%, jeweils bezogen auf das Gesamtgewicht des Pigmentes. Der Gewichtsanteil sollte, bezogen auf die eingesetzte Menge an Pigment, vorzugsweise nicht über 1,0 Gew.-% liegen, da andernfalls Verluste der optischen Qualität des Pigmentes zu stark sein könnten. Unterhalb eines Gewichtsanteils von 0,1 Gew.-% wiederum ist die zusätzliche UV-Stabilisierung in der Regel nicht ausgeprägt genug. Im Einzelfall hängt der Gewichtsanteil von der Feinheit und damit einhergehend von der spezifischen Oberfläche des Perlglanzpigmentes sowie von der Schichtdicke der TiO₂-Schicht ab. Feinere Pigmente und dickere TiO₂-Schichten benötigen im allgemeinen auch einen höheren Gehalt an Ceroxid und/oder Cerhydroxid und/oder Ceroxidhydrat.

Der SiO₂-Gehalt der erfindungsgemäßen Perlglanzpigmente liegt vorzugsweise bei einem Anteil von 0,5 bis 8 Gew.-% des Pigmentes, bevorzugt von 1,0 bis 6,5 Gew.-%, weiter bevorzugt von 1,5 Gew.-% bis 5,0 Gew.-%, und besonders bevorzugt von 1,8 bis 4,5 Gew.-%, jeweils bezogen auf das Gesamtgewicht des Pigmentes. Auch hier hängt im Einzelfall die SiO₂-Menge von der Feinheit und damit einhergehend von der spezifischen Oberfläche des Perlglanzpigmentes sowie von der Schichtdicke der TiO₂-Schicht ab. Feinere Pigmente und dickere TiO₂-Schichten benötigen im allgemeinen ebenfalls einen höheren SiO₂-Gehalt. Oberhalb von 8 Gew.-% SiO₂ beobachtet man keinerlei weitere Verbesserung der Wetter- und UV-Stabilität. Oft sogar werden die Eigenschaften schlechter, vermutlich da die dickeren Schutzschichten spröde und/oder brüchig sind und leichter Risse entstehen, so dass die Photoaktivität des beschichteten TiO₂ nicht mehr wirksam genug unterdrückt wird. Unterhalb von 0,5 Gew.-% ist die schützende Wirkung der SiO₂-Schicht im Allgemeinen zu gering.

In der SiO₂-Schicht können neben SiO₂ auch Hydroxide und/oder Oxidhydrate des Siliziums enthalten sein.

Es wird vermutet, dass die besseren Wetter- und UV-Beständigkeiten der erfindungsgemäßen Perlglanzpigmente insbesondere auf die erfindungsgemäße Schichtenfolge von zunächst Ceroxid und nachfolgend SiO₂ zurückzuführen ist. Ceroxid und/oder Ceroxid-Hydrat und/oder Cerhydroxid ist als sehr wirksames Mittel zur Unterdrückung der photochemischen Aktivität von TiO₂ an sich bekannt. Die Wirksamkeit beruht wohl vor allem auf dem bekannten Ce(III)/Ce(IV) Redoxsystem. Hierdurch können Radikale, die infolge der photochemischen Aktivität des TiO₂ an dessen Oberfläche generiert werden, wirksam abreagieren. Offenbar ist diese Effizienz von Ceroxiden als Barriere für photokatalytisch erzeugte Radikale besondershoch, wenn Ceroxid und/oder Ceroxid-Hydrat und/oder Cerhydroxid bereits als erste Schicht mit direktem Kontakt zur TiO₂-Oberfläche des vorgelegten Pigments abgeschieden wird.

Bei der vorliegenden Erfindung ist es daher bevorzugt, die Ceroxid und/oder Ceroxid-Hydrat und/oder Cerhydroxid -Schicht direkt auf der TiO₂-Schicht aufzubringen. Die Ceroxid und/oder Ceroxid-Hydrat und/oder Cerhydroxid-Schicht muß aber nicht direkt auf der TiO₂-Schicht aufgebracht werden. Die Ceroxid und/oder Ceroxid-Hydrat und/oder Cerhydroxidschicht wird vorzugsweise durch alleinige Fällung, d.h. nicht als Mischfällung aufgebracht, so dass die Ceroxid und/oder Ceroxid-Hydrat und/oder Cerhydroxidschicht vorzugsweise im wesentlichen frei von weiteren Metalloxiden ist.

Bevorzugt ist die Cer-haltige Schicht aus Ceroxid und/oder Ceroxid-Hydrat und/oder Cerhydroxid eine diskrete Schicht, die mit der darunterliegenden Schicht, beispielsweise einer geglühten oder ungeglühten Metalloxidschicht wie Titanoxidschicht, keine Mischschicht ausbildet.

Des weiteren ist es bevorzugt, die SiO₂-Schicht direkt auf der Ceroxid und/oder Ceroxid-Hydrat und/oder Cerhydroxidschicht aufzubringen. Äußerst bevorzugt wird die SiO₂-Schicht aus einem überwiegend organischen Lösungsmittelgemisch unter Verwendung von Sol-Gel-Verfahren, wie nachstehend erläutert, aufgebracht. Es ist ferner bevorzugt, daß die SiO₂-Schicht ebenfalls eine diskrete Schicht ist, die mit der darunterliegenden Cer-haltigen Schicht aus Ceroxid und/oder Ceroxid-Hydrat und/oder Cerhydroxid keine Mischschicht ausbildet.

Die erfindungsgemäßen Pigmente weisen mithin vorzugsweise einen Schutzschichtaufbau aus einer Ceroxid und/oder Ceroxid-Hydrat und/oder Cerhydroxidschicht, direkt nachfolgend einer SiO₂-Schicht, auf die die angegebene Oberflächenmodifizierung mit wenigstens einem Silan mit wenigstens einer funktionellen Bindungsgruppe und wenigstens einem Silan ohne Bindungsgruppe aufgebracht ist. Dieser Schutzschichtaufbau wird vorzugsweise direkt auf eine TiO₂-Schicht aufgebracht.

Die nachfolgende SiO₂-Schicht, d.h. die zweite Schutzschicht, stellt in jedem Fall eine weitere Barriere dar. Sie schützt die Perlglanzpigmentoberfläche vor eindringendem Wasser und hält umgekehrt radikalische Spezies, die die Ceroxid- und/oder Ceroxid-Hydrat -und/oder Cerhydroxidschicht möglicherweise passiert haben, zurück.

Zudem kann die Silikatschicht auch vermutlich aufgrund ihrer elektronischen Natur stabilisierend wirken. Es wird vermutet, daß die energetische Lage der Bandkanten von SiO₂ im Vergleich zu jener des TiO₂ im vorzugsweise verwendeten TiO₂-beschichteten Perlglanzpigment derart günstig ist, daß der Transfer insbesondere von Elektronen-Löchern, aber auch von Elektronen, die nach Absorption von UV-Photonen im Halbleiter TiO₂ entstehen, an die Grenzfläche des Pigmentes wirksam unterdrückt wird ("Diodeneffekt").

Vorteilhafte Eigenschaften der erfindungsgemäßen Perlglanzpigmente wurden nicht nur aufgrund des vorstehend beschriebenen, optimierten Oxidschichtaufbaus erzielt. Überraschenderweise wurden weitere vorteilhafte anwendungstechnische Eigenschaften erhalten durch eine organisch-chemische Nachbeschichtung der SiO₂-Schicht, die wenigstens ein Silan mit wenigstens einer funktionellen Bindungsgruppe und wenigstens ein Silan ohne funktionelle Bindungsgruppe umfasst. Überraschenderweise weist das erfindungsgemäße Perlglanzpigment ein ausgezeichnetes Orientierungsverhalten im Lackmedium auf. Die optischen Eigenschaften wie zum Beispiel Glanz sind sehr gut.

Unter einer funktionellen Bindungsgruppe ist hier eine funktionelle Gruppe zu verstehen, die eine chemische Wechselwirkung zum Bindemittel einzugehen vermag. Die chemische Wechselwirkung kann dabei aus einer kovalenten Bindung, einer Wasserstoffbrückenbindung oder einer ionischen Wechselwirkung bestehen.

Die funktionellen Bindungsgruppen umfassen Acrylat-, Methacrylat-, Vinyl-, Amino-, Cyanat, Isocyanat, Epoxy-, Hydroxy- Thiol-, Ureido- und/oder Carboxylgruppen.

Die Wahl einer geeigneten funktionellen Gruppe hängt von der chemischen Natur des Bindemittels ab. Bevorzugt wählt man eine den Funktionalitäten des Bindemittels chemisch kompatible funktionelle Gruppe, um eine gute Anbindung zu ermöglichen. Diese Eigenschaft ist im Hinblick auf wetterstabile und UV-stabile Perlglanzpigmente sehr wichtig, da auf diese Weise eine genügend große Haftfestigkeit zwischen Pigment und ausgehärtetem Bindemittel gegeben ist. Dies ist beispielsweise in Haftprüfungstests wie dem Gitterschnitttest bei Schwitzwassertestbelastungen gemäß der DIN 50 017 nachzuprüfen. Das Bestehen eines derartigen Testes stellt eine notwendige Bedingung für die Verwendung von wetterstabilen Perlglanzpigmenten im Automobillack dar.

Die vorzugsweise als Oberflächenmodifizierungsmittel verwendeten organofunktionellen Silane, die geeignete funktionelle Gruppen aufweisen, sind kommerziell verfügbar und werden beispielsweise von der Fa. Degussa, Rheinfelden, Deutschland, hergestellt und unter dem Handelsnamen "Dynasylan®" vertrieben. Weitere Produkte können von der Fa. OSi Specialties (Silquest®-Silane) oder von der Fa. Wacker, beispielsweise Standard- und α-Silane aus der GENIOSIL®-Produktgruppe, bezogen werden.
Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), Bis-(3-Triethoxysilylpropyl)polysulfid (Silquest A-1289), Bis-(3-Triethoxysilyl)disulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), (Methacryloxymethyl)tri(m)ethoxysilan (GENIOSIL XL 33, XL 36), (Methacryloxymethyl)(m)ethyldimethoxysilan (GENIOSIL XL 32, XL 34), lsocyanatomethyl)trimethoxysilan (GENIOSIL XL 43), (lsocyanatomethyl)methyldimethoxysilan (GENIOSIL XL 42), (Isocyanatomethyl)trimethoxysilan (GENIOSIL XL 43) 3-(Triethoxysilyl)propylbemsteinsäureanhydrid (GENIOSIL GF 20).

Bei einer bevorzugten Ausführungsform enthält das die SiO₂-Schicht modifizierende organofunktionelle Silangemisch neben wenigstens einem Silan ohne funktionelle Bindungsgruppe wenigstens ein aminofunktionelles Silan. Die Aminofunktion ist eine funktionelle Gruppe, die mit den meisten in Bindemitteln vorhandenen Gruppen eine oder mehrere chemische Wechselwirkungen eingehen kann. Dies kann eine kovalente Bindung, wie z.B. mit Isocyanat- oder Carboxylatfunktionen des Bindemittels, oder Wasserstoffbrückenbindungen wie mit OH- oder COOR-Funktionen oder auch ionische Wechselwirkungen beinhalten. Eine Aminofunktionist daher für den Zweck der chemischen Anbindung des Effektpigmentes an verschiedenartige Bindemittel sehr gut geeignet.

Bevorzugt werden hierzu folgende Verbindungen genommen: Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triamino-funktionelles Trimethoxysilan (Silquest A-1130), bis-(gamma-Trimethoxysilylpropyl)amin (Silquest A-1170), N-ethylgamma-aminoisobutyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest Y-11637), N-Cyclohexylaminomethylmethyldiethoxysilan (GENIOSIL XL 924), (N-Cyclohexylaminomethyl)triethoxysilan (GENIOSIL XL 926), (N-Phenylaminomethyl)trimethoxysilan (GENIOSIL XL 973) und deren Mischungen.

Bei einer weiterhin bevorzugten Ausführungsform ist das Silan ohne funktionelle Bindungsgruppe ein Alkylsilan. Das Alkylsilan weist vorzugsweise die Formel (I) auf:

R_{(4-z)}Si(X)_{z}, (I)

Hierbei ist z eine ganze Zahl von 1 bis 3, R ist eine substituierte oder unsubstituierte, unverzweigte oder verzweigte Alkylkette mit 10 bis 22 C-Atomen und X steht für eine Halogen- und/oder Alkoxygruppe. Bevorzugt sind Alkylsilane mit Alkylketten mit mindestens 12 C-Atomen. R kann auch zyklisch mit Si verbunden sein, wobei in diesem Fall z üblicherweise 2 ist.

Ein derartiges Silan bewirkt eine starke Hydrophobierung der Pigmentoberfläche. Diese wiederum führt dazu, daß das derart beschichtete Perlglanzpigment in der Lackbeschichtung tendenziell nach oben aufschwimmt. Bei plättchenförmigen Effektpigmenten wird ein derartiges Verhalten als "leafing"-Verhalten bezeichnet.

Völlig überraschend wurde nun gefunden, dass eine Silanmischung bestehend aus mindestens einem Silan, welches wenigstens eine funktionelle Gruppe besitzt, die eine Anbindung an das Bindemittel ermöglicht, und einem wie oben beschriebenen, in Wasser unlöslichen oder kaum löslichen Alkylsilan ohne Aminogruppe optimale anwendungstechnische Eigenschaften der Perlglanzpigmente ermöglicht.

Die Perlglanzpigmente sind derart gut an den Lack gebunden, daß kein Verlust der Haftfestigkeit auftritt. Andererseits zeigen die Pigmente eine hervorragende planparallele Orientierung im Lack sowie ein "Rest-leafing" Verhalten, d.h. ein statistisch messbarer Teil der Pigmente befindet sich im oberen Bereich des ausgehärteten Basislackes in der Nähe zum Klarlack. Normalerweise führt eine Anordnung der Pigmente an der oberen Grenzfläche des Basislackes zu einem Verlust der Haftungseigenschaften, da das Perlglanzpigment aufgrund seiner plättchenförmigen Struktur als störende Barriere zwischen Klarlack und Basislack wirkt. Bei der vorliegenden Erfindung ordnen sich die Pigmente überraschenderweise nicht an der oberen Grenzfläche des Basislackes, sondern nur in der Nähe der oberen Grenzfläche des Basislackes an, wodurch eine zuverlässige Anbindung des Klarlackes an den Basislack möglich ist. Das heißt, die erfindungsgemäßen Pigmente wirken vorteilhafterweise nicht als störende Barriere.

Dieses "Rest-leafing" Verhalten und die sehr gute planparallele Orientierung bewirken verbesserte Glanzeigenschaften und eine hohe Farbtonreinheit der erfindungsgemäßen Perlglanzpigmente, beispielsweise in einer Lackierung.

Bei einer Kettenlänge der Alkylsilane unter 10 C-Atomen ist die Hydrophobierung der Oberfläche nicht ausreichend, um derartige Effekte zu zeigen. Vermutlich können sich hier keine Segmente an der Pigmentoberfläche ausbilden, bei denen die Alkylketten parallel zueinander im Sinne einer "self-assembly monolayer" Schicht angeordnet sind. Derartige Schichten erhält man bevorzugt, wenn man eine Oberfläche mit Additiven belegt, welche eine Haftgruppe zur Oberfläche und Alkylketten mit mindestens 10 C-Atomen aufweisen.
Besitzen die Silane mehr als 22 C-Atome, ist i.d.R. die Anbindung an das Bindemittelsystem durch das Silan mit funktionellen Anbindungsgruppen nicht mehr gut genug, d.h. bei einer Lackapplikation beobachtet man häufig Haftungsprobleme im Schwitzwassertest nach DIN 50 017.

Bei einer weiteren bevorzugten Ausführungsform enthält die Oberflächenmodifizierung Silane der Strukturformel (II)

(R¹-X-[A -Y]ₙ-B)_{(4-z)}Si(OR²)_{z} (II)

wobei
- n = 1 bis 100 ist,
- z für eine ganze Zahl von 1 bis 3 steht,
- R¹ für gerad- oder verzweigtkettiges Alkyl mit 1 bis 12 Kohlenstoffatomen, das mit Halogenen substituiert sein kann; Aryl mit 6 bis 12 C-Atomen; oder Aryl mit 6 bis 12 C-Atomen, das mit Alkyl mit 1 bis 6 Kohlenstoffatomen und/oder mit Halogenen substituiert sein kann; steht,
- R² für gerad- oder verzweigtkettiges Alkyl mit 1 bis 6 Kohlenstoffatomen steht,
- A und B unabhängig voneinander für eine zweiwertige Gruppe, die aus gerad- oder verzweigtkettigem Alkylen mit 1 bis 12 Kohlenstoffatomen; Arylen mit 6 bis 12 C-Atomen; oder Arylen mit 6 bis 12 C-Atomen, das mit Alkyl mit 1 bis 6 Kohlenstoffatomen und/oder mit Halogenen substituiert sein kann; besteht, stehen,
- X und Y unabhängig voneinander für O oder S stehen.
Als Halogen wird hier F, Cl, Br und/oder J verstanden.

Bei bevorzugten Ausführungsformen stehen R¹ und R² unabhängig voneinander aus Methyl, Ethyl, n-Propyl, iso-Propyl, n-Butyl, iso-Butyl, tert.-Butyl, Phenyl, Biphenyl, Naphtyl, oder Mischungen davon.

Bei weiterhin bevorzugten Ausführungsformen bestehen A und B unabhängig voneinander aus Ethylen, Propylen, 1-Butylen, 2-Butylen, Phenylen, Phenylen, das mit Alkyl mit 1 bis 6 C-Atomen substituiert ist, und Mischungen davon.

Diese Silane können in reiner Form mit definiertem n oder in Mischungen mit verschiedenen n vorliegen.

Gemäß einer bevorzugten Ausführungsform liegt n in einem Bereich von 1 bis 20, weiter bevorzugt von 5 bis 15.

Bei einer besonders bevorzugten Ausführungsform enthält die Oberflächenmodifizierung Silane der Formel (III)

H₃CO-[CH₂-CH₂-O-]ₙCH₂-CH₂-Si(OR²)₃, (III)

wobei n = 1 bis 100, vorzugsweise 1 bis 20, weiter bevorzugt 5 bis 25 ist, und R² die gleiche Bedeutung wie oben angegeben hat. Besonders bevorzugt ist R² unabhängig voneinander Methyl oder Ethyl.

Auch diese Silane können in reiner Form mit einem definierten n oder in Mischungen (verschiedene n) vorliegen. Derartige Silane haben aufgrund ihrer Oxyethylengruppe(n) innerhalb der Kette besonders gute Benetzungs- und Dispergiereigenschaften. Erhältlich sind derartige Silane beispielsweise von der Firma OSi Specialities unter dem Produktnamen Silquest^{®} A-1230.

Die organofunktionellen Silane liegen vor dem Aufbringen auf die SiO₂-Schicht bevorzugt in überwiegend monomerer Form vor.

Die Menge der als Nachbeschichtung aufgebrachten Silane in bezug auf das gesamte, mit Ceroxid und SiO₂-beschichtete Perlglanzpigment beträgt vorzugsweise 0,1 bis 6 Gew.-%, bevorzugt 0,2 bis 5 Gew.-% und besonders bevorzugt 0,3 bis 3 Gew.-%, bevorzugt 0,5 bis 2,5 Gew.-%. Im Einzelfall kann auch hier die Menge von der Feinheit und spezifischen Oberfläche des Perlglanzpigmentes abhängen. Generell ist jedoch eine Menge in der Größenordung einer oder weniger Silanmonolage(n) auf der Pigmentoberfläche ausreichend. Zu kleine Mengen führen zu keiner ausreichenden Belegung der Pigmentoberfläche und in der Folge zu schlechten Schwitzwassertestergebnissen in Lackapplikationen (Test nach DIN 50 017).

Das Mischungsverhältnis der wenigstens eine funktionelle Bindungsgruppe enthaltenden und der keine funktionelle Bindungsgruppe enthaltenden Silane zueinander beträgt (bezogen auf Gewichtsverhältnisse) vorzugsweise 1: 5 bis 5:1, weiter bevorzugt 1:3 bis 3:1 und besonders bevorzugt 1:2 bis 2:1. Enthält die Silanmischung insgesamt zu wenig funktionelle Bindungsgruppen, so wird die Oberflächenmodifizierung zu hydrophob. In der Llackapplikation kann dies bei einem Belastungstest wie der Schwitzwasserprüfung nach DIN 50 017 zu Haftungsprobleme führen. Bei einem Überschuss an funktionellen Bindungsgruppen hingegen ist die Oberfläche zu hydrophil und das Anpastungsverhalten des Pigmentes in einem Wasserlack sowie die Orientierung der Perlglanzpigmente in der ausgehärteten Lackapplikation ist schlechter. In der Schwitzwasserprüfung begünstigt eine zu ausgeprägte Hydrophilie des Pigments die Einlagerung von Wasser in die Lackschicht, was vor allem eine verminderte Abbildungsschärfe (DOI) sowie die Bildung von mikrofeinen Wasserblasen zur Folge haben kann.

Bei einer weiteren erfindungsgemäßen Ausführung wird das zu stabilisierende Perlglanzpigment mit einer Mischschicht aus Ceroxid und/oder Ceroxid-Hydrat und/oder Cer-hydroxid und SiO₂ als erste Schutzschicht beschichtet. Das eingesetzte Cer liegt in dreiwertiger oder in vierwertiger Form oder in Mischungen dieser beiden Formen vor, vorzugsweise wird dreiwertiges Cer eingesetzt. Bevorzugt ist jedoch eine Abfolge von zunächst aus Ceroxid und/oder Ceroxid-Hydrat und/oder Cer-hydroxid und dann SiO₂, da diese eine höhere UV-Stabilität bringt.

Eine weitere erfindungsgemäße Ausführung besteht darin, daß das plättchenförmige Substrat eine oder mehrere Metalloxidschichten, vorzugsweise eine Schicht aus Zinnoxid, aufweist. Die Schicht aus Zinnoxid kann aufgebracht werden, wie beispielsweise in Beispiel 1 und 5 der DE 3535818 A1 beschrieben.

Diese Schicht wird vorzugsweise bereits beim Herstellungsprozess des Substrates aufgebracht und anschließend calciniert. Zinnoxid wird bei der Herstellung von Perlglanzpigmenten verwendet, um einer TiO₂-Schicht, die auf das Substrat, vorzugsweise Glimmerplättchen, gefällt wird, eine Rutilstruktur zu induzieren. TiO₂ wächst auf Glimmer in einer Anatasstruktur auf, die aufgrund ihrer höheren Photoaktivität unerwünscht ist. Eine Vorbeschichtung des Substrats mit SnO₂ jedoch induziert eine Rutilmodifikation der nachfolgend aufgebrachten TiO₂-Schicht, da beide Oxide eine ähnliche Kristallstruktur aufweisen.

Es wurde nun überraschenderweise gefunden, daß eine zusätzliche Beschichtung mit SnO₂ nach einer TiO₂-Beschichtung, d.h. vor Aufbringung der ersten Schutzschicht aus oder mit Ceroxid und/oder Ceroxid-Hydrat und/oder Cer-hydroxid und der zweiten Schutzschicht aus SiO₂ die Wetterstabilität nochmals steigert. Die SnO₂-Schicht wird dabei vorzugsweise direkt auf die TiO₂-Schicht aufgebracht.

Bei weiteren erfindungsgemäßen Ausführungsformen können zwischen der ersten Schutzschicht aus oder mit Ceroxid und/oder Ceroxid-Hydrat und/oder Cer-hydroxid und der zweiten Schutzschicht aus SiO₂ weitere Schichten, vorzugsweise Metalloxidschichten, angeordnet sein. Bei diesen Metalloxiden handelt es sich bevorzugt um ZrO₂.

Als Perlglanzpigmente können alle gängigen kommerziell erhältlichen Pigmente eingesetzt werden, wie beispielsweise die nachstehend angeführten.

Die Perlglanzpigmente weisen ein plättchenförmiges Substrat auf, welches vorzugsweise aus der Gruppe, bestehend aus Glimmer, Talkum, Sericit, Kaolin sowie SiO₂-, Glas-, Graphit-, Al₂O₃-Plättchen und deren Mischungen, ausgewählt wird. Bevorzugte Substrate sind hierbei Glimmer, SiO₂-, Glas-, oder Al₂O₃-Plättchen.

Auf dieses niedrig brechende plättchenförmige Substrat werden weitere, bevorzugt hochbrechende, Schichten abgeschieden. Derartige Schichten werden vorzugsweise aus der Gruppe, bestehend aus Metallchalkogeniden, insbesondere Metalloxiden, Metallhydroxiden, Metalloxidhydraten, Metallsuboxiden und Metallsulfiden, Metallfluoriden, Metallnitriden, Metallcarbiden und deren Mischungen, ausgewählt.

Bevorzugt werden die Substrate der Perlglanzpigmente mit einem mehrschichtigen Schichtaufbau mit oder aus Metalloxid, Metallhydroxid, Metallsuboxid und/oder Metalloxidhydrat beschichtet, wobei die Reihenfolge der Schichten variabel ist. Die Metalloxide, Metallhydroxide, Metallsuboxide und/oder Metalloxidhydrate können auch nebeneinander in der selben Schicht vorliegen.

Bevorzugt werden dabei die Substrate der Perlglanzpigmente mit einer oder mehreren Metalloxidschichten aus der Gruppe, bestehend aus oder umfassend TiO₂, Fe₂O₃, Fe₃O₄, TiFe₂O₅, ZnO, SnO₂, CoO, CO₃O₄, ZrO₂, Cr₂O₃ VO₂, V₂O₃, (Sn,Sb)O₂ und deren Mischungen, beschichtet. Besonders bevorzugt sind TiO₂ und/oder Fe₂O₃.

Bei einer weiteren Ausführungsform weist der mehrschichtige Schichtaufbau eine. Schichtenfolge auf, bei dem wenigstens eine hochbrechende Schicht und wenigstens eine niedrig brechende Schicht in alternierender Weise auf einem Substrat angeordnet sind.

Bei der alternierenden Anordnung ist es auch möglich ein oder mehrere hochbrechende Schichten unmittelbar übereinander und nachfolgend ein oder mehrere niedrig brechende Schichten unmittelbar übereinander anzuordnen. Wesentlich ist jedoch, daß in dem Schichtaufbau hoch und niedrig brechende Schichten vorkommen.

Bevorzugt ist, dass der mehrschichtige Schichtaufbau eine Schichtenfolge aufweist, bei dem wenigstens eine hoch brechende Schicht, wenigstens eine niedrig brechende Schicht und wenigstens eine hoch brechende Schicht auf einem Substrat nacheinander angeordnet sind.

Auch bei dieser Variante können ein oder mehrere niedrig bzw. hoch brechende Schichten jeweils unmittelbar übereinander angeordnet sein. Wesentlich ist jedoch, daß in dem Schichtaufbau von innen nach außen hoch und niedrig und wiederum hoch brechende Schichten angeordnet sind.

Vorzugsweise enthält oder besteht die wenigstens eine hochbrechende Schicht aus Metalloxid und/oder Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen. Die niedrig brechende Schicht enthält oder besteht vorzugsweise aus Metalloxid und/oder Metallhydroxid aus der Gruppe, bestehend aus SiO₂, Al₂O₃ und Mischungen davon.

Perlglanzpigmente, die hoch und niedrig brechende Schichten aufweisen, ergeben besonders intensive Interferenzfarben. Insbesondere Perlglanzpigmente mit hoch brechenden und einer niedrig brechenden und wiederum einer hoch brechenden Schicht sind besonders bevorzugt. Eine Schichtfolge mit oder aus TiO₂ / SiO₂ / TiO₂ und optional noch einer Schicht mit Fe₂O₃ ergeben intensive Goldtöne und sind besonders bevorzugt.

Bei einer weiteren Ausführungsform bestehen die Perlglanzpigmente aus Glassplättchen als Substrat, welche beidseitig mit semitransparenten Metallschichten beschichtet sind.

Die Metalle der semitransparenten Metallschichten sind bevorzugt aus der Gruppe bestehend aus Silber, Aluminium, Chrom, Nickel, Gold, Platin, Palladium, Kupfer, Zink, deren Mischungen und deren Legierungen, ausgewählt. Die Dicken der semitransparenten Schichten liegen vorzugsweise in einem Bereich von ca. 2 bis ca. 30 nm, weiter bevorzugt von ca. 5 bis ca. 20 nm.

Als plättchenförmiges Substrat, welches erfindungsgemäß mit der Schutzschicht versehen wird, werden vorzugsweise folgende Substrate verwendet:
- TiO₂ und/oder Eisenoxid beschichteten Glimmerplättchen,
- TiO₂ und/oder Eisenoxid beschichteten Glasplättchen,
- TiO₂ und/oder Eisenoxid beschichteten Aluminiumoxidplättchen,
- TiO₂ und/oder Eisenoxid beschichteten SiO₂-Plättchen,
- Bismutoxychloridplättchen,
- reine TiO₂-Plättchen
sowie Mischungen all dieser Substrate.

Der Brechungsindex der Metalloxidschicht ist, um einen guten Perlglanzeffekt zu ergeben, größer als 1,8, bevorzugt größer als 2,2, weiter bevorzugt größer als 2,3, noch weiter bevorzugt größer als 2,4, und besonders bevorzugt 2,5 oder größer.

Bevorzugt werden bei der vorliegenden Erfindung mit TiO₂ beschichtete Substrate mit der vorstehend beschriebenen Schutzschicht versehen. Mit TiO₂ und / oder Eisenoxid beschichtete Glimmerpigmente sind beispielsweise unter dem Namen PHOENIX^{®} (Fa. Eckart) im Handel erhältlich. Mit TiO₂ und/oder Fe₂O₃ beschichtete Al₂O₃-Flakes werden unter dem Handelsnamen Xirallic^{®} und entsprechend beschichtete SiO₂-Flakes unter dem Handelsnamen Colorstream^{®} von der Fa. Merck angeboten. Mit TiO₂ und / oder Eisenoxid beschichtete Glasflakes werden z.B. von der Fa. Engelhard, USA, unter der Bezeichnung Firemist^{®} angeboten. Auch mehrschichtige Interferenzpigmente, wie sie z.B. in der DE 19618569 beschrieben werden, bestehend aus einem Trägermaterial, das mit alternierenden Schichten von Metalloxiden mit niedriger und hoher Brechzahl beschichtet ist, können erfindungsgemäß nachbeschichtet werden.

Die vorgenannten Pigmente lassen sich hervorragend zunächst mit einer ersten Schutzschicht aus oder mit Ceroxid und/oder Ceroxid-Hydrat und/oder Cerhydroxid und dann mit einer zweiten Schutzschicht aus SiO₂ und nachfolgender organischchemischer Nachbeschichtung gegenüber der durch UV-Licht induzierten photokatalytischen Aktivität stabilisieren.

Bei dem erfindungsgemäßen Verfahren kann das Pigment nach Schritt (e) vom Lösemittel getrennt und ggfs. getrocknet werden. Weiterhin können sich, wenn nötig, Klassierungen anschließen.

Die Fällung der Cerhydroxidschicht findet unter optionaler Zugabe von Wasser und optionaler Zugabe von Base oder Säure bevorzugt bei Reaktionstemperaturen von Raumtemperatur bis zur Siedetemperatur des Lösemittels und gegebenenfalls in Gegenwart eines Katalysators statt. Die während der Abscheidungsreaktion freigesetzten sauren oder basischen Bestandteilen, wie beispielsweise Protonen bzw. Hydroxylionen, können durch Zusatz einer Base bzw. Säure neutralisiert oder teilweise neutralisiert werden, bevor die Abscheidung von Silikat, vorzugsweise SiO₂ gestartet wird. Die Base bzw. Säure kann dabei gleichzeitig mit dem Cer-Reagenz zudosiert oder nach dem Einleiten der Cer-Salzlösung zugesetzt werden. Es hat sich überraschend gezeigt, daß die Fällung der eingesetzten Cerreagenzien in einem pH-Wertbereich von 3 bis 8, vorzugsweise von pH 4 bis 7, nahezu vollständig, vorzugsweise vollständig, erfolgt, so daß bei der nachfolgenden Zugabe von vorzugsweise Tetraalkoxysilan und Fällung von SiO₂ eine nahezu reine, vorzugsweise reine, SiO₂-Schicht aufgebracht wird.

Erfindungsgemäß erfolgt die Aufbringung der Cer-haltigen Schicht und der SiO₂-Schicht mithin sequentiell, so daß vorzugsweise voneinander getrennte und diskrete Schichten aufgebracht werden.

Die SiO₂-Schicht wird vorzugsweise durch ein Sol-Gel-Verfahren in überwiegend organischem Lösemittelgemisch aufgebracht. Hierbei wird in Schritt (d) die SiO₂-Schicht unter Verwendung von vorzugsweise Tetraalkoxysilan und optionaler Zugabe von Wasser aufgebracht. Derartige Sol-Gel-Prozesse, die in einem überwiegend organischen Lösemittelgemisch durchgeführt werden, haben gegenüber der SiO₂-Abscheidung ausgehend von wässrigen Silikatlösungen, wie sie im Stand der Technik beschrieben wurden, Vorteile. Moderne Bindemittelsysteme sind sehr empfindlich in bezug auf die Anwesenheit von Salzen. Diese stören beispielsweise die kolloidale Stabilität von Bindemittelteilchen und können somit eine unkontrollierte Koagulation des Bindemittelsystems eines Lackes bedingen. Dadurch wird der Lack unbrauchbar. Außerdem fördern wasserlösliche Bestandteile wie Salze in Lackierungen osmotische Prozesse, so dass es durch Ansammlung von Wasser in der Lackschicht zu Blasenbildung und Enthaftungsproblemen kommen kann. Durch ein salzfreies bis salzarmes Herstellungsverfahren eines Perlglanzpigmentes entfallen aufwendige Reinigungsschritte. Das heißt, die erfindungsgemäßen Pigmente weisen nach Aufschlämmung geringere Leitfähigkeiten auf als sonst üblich.

Als überwiegendes Reaktionsnebenprodukt entstehen Alkohole, die zusammen mit dem alkoholischen Lösemittel beispielsweise durch eine Destillation aufgearbeitet und recycelt werden können.

Si(OR)₄ + 2 H₂O → SiO₂ + 4 ROH

Gemäß einer bevorzugten Weiterbildung der Erfindung entspricht die Alkoxygruppe des Tetraalkoxysilans dem verwendeten organischen Lösemittel. Bei Hydrolyse des Tetraalkoxysilans kommt es zur Freisetzung des korrespondierenden Alkohols, beispielsweise von Methanol, Ethanol oder Propanol wenn R CH₃, C₂H₅ bzw. C₃H₇ ist. Bei Verwendung von Methanol, Ethanol bzw. Propanol als organischem Lösemittel entsteht nach der Hydrolyse mithin kein Gemisch aus verschiedenen Lösemitteln, was prozeßtechnisch einen sehr großen Vorteil im Hinblick auf die Aufarbeitung bzw. Wiederverwendung des Lösemittels darstellt.

Ein weiterer Vorteil liegt in der Verwendung einer monomeren Ausgangssubstanz zur Herstellung der SiO₂-Schicht. Beim Sol-Gel-Prozeß in organischem Lösungsmittel beginnt die Reaktion mit der Hydrolyse des Tetraalkoxysilans, d.h. einem molekularen Monomeren. Wässrige Silikatlösungen wie Wasserglas hingegen liegen stets schon in einer oligomeren Form vorkondensierter -O-Si-O-Einheiten vor. Der Hydrolyseschritt sowie die nachfolgende Kondensation kann daher beim erfindungsgemäß bevorzugt verwendeten Sol-Gel-Prozeß besser kontrolliert werden. Dies wirkt sich vorteilhaft auf die Qualität und Morphologie der gebildeten Schicht aus. Vermutlich ist auch die kontrollierte Abscheidung des SiO₂ im Sol-Gel-Prozeß in überwiegend organischem Lösemittelgemisch für die hohe Qualität der Schicht und die dadurch erhaltene sehr gute Barrierewirkung verantwortlich.

Als Ausgangsverbindungen für die SiO₂-Schicht werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Die Katalyse des Sol-Gel-Prozesses zur SiO₂-Abscheidung findet bevorzugt in basischem Milieu statt. Als Katalysatoren werden bevorzugt stickstoffhaltige Basen verwendet. Beispiele hierfür sind Ammoniak, Hydrazin, Methylamin, Ethylamin, Triethanolamin, Dimethylamin, Diethylamin, Methylethylamin, Trimethylamin, Triethylamin, Ethylendiamin, Trimethylendiamin, Tetramethylendiamin, 1-Propylamin, 2-Propylamin, 1-Butylamin, 2- Butylamin, 1-Propylmethylamin, 2-Propylmethylamin, 1-Butylmethylamin, 2-Butylmethylamin, 1-Propylethylamin, 2-Propylethylamin, 1-Butylethylamin, 2-Butylethylamin, Piperazin und Pyridin.

Diese Basen eignen sich auch für die Neutralisation der bei der Cerhydroxid-Abscheidung gegebenenfalls freigesetzten Protonen.

Zur Neutralisation von gegebenenfalls freigesetzten basischen Bestandteilen bei der Cerhydroxid-Abscheidung eignen sich beispielsweise HNO₃ oder HCl.

Bei einer bevorzugten Variante des erfindungsgemäßen Verfahrens ist die Flüssigphase in Schritt (a) ein überwiegend organisches Lösemittelgemisch. Weiterhin bevorzugt wird die gesamte Beschichtung (b) bis (e) des Perlglanzpigmentes in einem überwiegend organischen Lösemittelgemisch bzw. in einer Flüssigphase mit einem überwiegenden Anteil an organischem Lösemittel durchgeführt. Unter einem überwiegend organischen Lösemittelgemisch wird hierbei ein solches verstanden, welches vorzugsweise weniger als 50 Gew-% Wasser enthält.

Als organische Lösemittel finden beispielsweise Ether, Ester, Alkohole, Ketone, Aldehyde oder Testbenzin Verwendung.

Bevorzugt werden als überwiegend organische Lösemittelgemische alkoholische Lösemittel mit einem Alkoholanteil von 50 bis 99 Gew.-% verwendet. Bevorzugt liegt der Alkoholanteil bei 60 bis 95 Gew.-% und besonders bevorzugt bei 70 bis 90 Gew.-%. Unterhalb eines Alkoholanteils von 50 Gew.-% können die anwendungstechnischen Eigenschaften der beschichteten Perlglanzpigmente beeinträchtigt werden. Dies kann beispielsweise bei einer Beschichtung einen Glanzverlust bedingen. Oberhalb von 99 Gew.-% schließlich enthält das Reaktionsgemisch offenbar zu wenig Wasser, was zu einer verzögerten Hydrolyse der Alkoxysilane führt, wodurch die Reaktionszeit zu lang wird.

Als Alkohole selbst kommen beispielsweise Methanol, Ethanol, n-Propanol, iso-Propanol, n-Butanol, 2-Methylpropanol, 2-Methoxypropanol, Butylglycol, etc. in Frage. Möglich sind auch Mischungen dieser Alkohole in beliebigen Verhältnissen. Der Restanteil des Gemisches setzt sich zum einen aus dem Reaktionspartner Wasser zusammen, zum anderen können weitere organische Lösemittel vorhanden sein.

Der Vorteil bei der Verwendung überwiegend organischer Lösemittel insbesondere bei Schritt (e) liegt in der sehr guten Löslichkeit vieler Silane in organischen Lösemitteln. Dadurch können neben hydrophilen Silanen insbesondere auch hydrophobe Silane zur Oberflächenmodifizierung verwendet werden. In wäßrigen Lösungen hingegen sind viele Silane nicht löslich. Man behilft sich hier mit einer kontrollierten Vorhydrolyse der Silane [US 5,759,255] oder der Synthese von speziellen wasserlöslichen Oligomersystemen [DE 196 39 783]. Vorhydrolysierte Silansysteme sind jedoch nicht sehr lagerungsfähig. Durch weitere Hydrolyse oder Kondensationsprozesse können die Silane weiter vernetzen, oligomerisieren und schließlich für den Zweck der Oberflächenmodifizierung unbrauchbar werden. Wasserlösliche Oligomersysteme schließlich müssen erst aufwendig synthetisiert werden, sind ebenfalls schwieriger zu lagern und sind in der Vielfalt der Variationsmöglichkeiten der organofunktionellen Gruppen beschränkt. Insbesondere sind Alkylsilane mit 10 bis 22 C-Atomen nicht oder nur kaum in Wasser löslich. Hingegen können derartige unpolare Alkylsilane problemlos in den hier verwendeten Lösemitteln und den oben genannten Lösungsmittelgemischen gelöst werden, was sich vorteilhaft auf die Schichtbildung an der Pigmentoberfläche auswirkt. Außerdem ist ein effektiver Materialeinsatz der relativ teuren Silane möglich.

Aminosilane hingegen sind zwar i.d.R. in Wasser löslich, werden jedoch autokatalytisch hydrolysiert und kondensieren zu oligomeren und polymeren Systemen. Sie besitzen daher in Wasser eine nur eingeschränkte Lagerungsstabilität.

Durch die größere Anzahl als Oberflächenmodifizierungsmittel zur Verfügung stehender Silane kann man die Oberflächeneigenschaften der erfindungsgemäßen Perlglanzpigmente in variabler Weise an die verschiedenen Lacksysteme anpassen. Hingegen ist man bei vorhydrolysierten Silanen und insbesondere bei wasserlöslichen Silanoligomeren auf kurzkettige aliphatische oder aromatische Reste bis maximal 8 C-Atome beschränkt.

Die Schritte (a) bis (e) des beschriebenen Verfahrens werden vorzugsweise im gleichen Flüssigmedium durchgeführt. Bei dieser Ausführungsform werden für Schritt (c) in überwiegend organischem Lösemittel hinreichend lösliche Cersalze verwendet.

Bevorzugte Beispiele hierfür sind Cer(III)acetat, Cer(III)octoat, Cer(III) acetylacetonat, Cer(III)nitrat oder Cer(III)chlorid oder Cer(IV)ammoniumnitrat.

Die hier beschriebene bevorzugte Variante des erfindungsgemäßen Verfahrens zeichnet sich durch ein Eintopfverfahren aus, bei dem die organisch-chemische Nachbeschichtung unmittelbar im Anschluss an die Beschichtung mit Ceroxid/-hydroxid und nachfolgend SiO₂ erfolgt. Die Silane werden dabei direkt, d.h. ohne Vorhydrolyse zur Reaktionslösung zugegeben, hydrolysieren in situ und kondensieren schließlich mit Hydroxylgruppen der SiO₂-Schicht, so daß eine kovalente Anbindung an der Pigmentoberfläche erfolgt. Dadurch ist eine äußerst einfache Prozeßführung bei gleichzeitig sehr guter Auswahl an verwendbaren Silanen gegeben.

Bei einer weiteren Variante des erfindungsgemäßen Verfahrens kann nach Aufbringung der Ceroxid und/oder Ceroxid-Hydrat und/oder Cerhydroxid-Beschichtung aus wässriger Lösung die SiO₂-Beschichtung auch in wässrigem Milieu aus Silikatlösungen erfolgen. Die Bedingungen zur Abscheidung von Cer- oder Silikatverbindungen aus wässriger Lösung werden beispielsweise in Beispiel 2, Zeilen 30-37 der EP 0141174 bzw. in Beispiel 1 der EP 649886 B1 sowie in Beispiel 1 der DE 4207723 bzw. in Beispiel 1 der DE 2106613 beschrieben. Anschließend kann gegebenenfalls ein Kalzinierungsschritt durchgeführt werden. Die hierzu notwendigen Bedingungen sind dem Fachmann an sich bekannt und können beispielsweise der DE 2106613 oder der DE 3535818 entnommen werden.

Ein weitere Variante des erfindungsgemäßen Verfahrens zur Herstellung der erfindungsgemäßen Pigmente mit einer weiteren Metalloxidschicht auf dem Substrat besteht darin, daß diese Schicht bereits im Herstellungsprozeß des Substrates aufgebracht und anschließend ggfs. kalciniert wird. Die Details dazu sind dem Fachmann bekannt und können z.B der DE 2106613 oder der DE 3535818 entnommen werden.

Ein weiteres Verfahren zur Herstellung der erfindungsgemäßen Pigmente mit einer weiteren Metalloxidschicht zwischen der Schicht aus Ceroxid und/oder Cerhydroxid und der SiO₂-Schicht besteht in der Fällung dieser Metalloxidschicht nach der Aufbringung der Ceroxid-/Cerhydroxidschicht. Diese Metalloxidschichtfällung kann entweder in überwiegend organischem Lösemittelgemisch oder in wäßriger Lösung erfolgen.

Die erfindungsgemäßen Perlglanzpigmente werden vorzugsweise in Lacken, Pulverlacken, Druckfarben, Kunststoffen und Coatings verwendet.

Insbesondere finden die erfindungsgemäßen beschichteten Perlglanzpigmente Verwendung als wetterechte Perlglanzpigmente in Automobillacken sowie in Pulverlacken und Coatings für Außenanwendungen.

Äußerst vorteilhaft ermöglichen die erfindungsgemäßen Perlglanzpigmente die Bereitstellung von einschichtigen UV-stabilen und wetterstabilen Lackierungen oder Beschichtungen, auf denen kein nachfolgender Klarlack oder Schutzlack aufgebracht werden muß.

Die der Erfindung zugrundeliegende Aufgabe wird ferner durch einen Gegenstand mit einer Beschichtung, die Perlglanzpigment gemäß einem der Ansprüche 1 bis 18 enthält, gelöst. Gemäß einer bevorzugten Weiterbildung der Erfindung ist der Gegenstand eine Fahrzeugkarosserie, vorzugsweise eine Kraftfahrzeugkarosserie, oder eine Fassade, beispielsweise ein Fassadenelement.

Die folgenden Beispiele erläutern die Erfindung näher, ohne sie zu beschränken.

### Beispiele

### Beispiel 1:

100g kommerziell erhältliches, blaues Perlglanzpigment auf Basis von TiO₂ beschichtetem Glimmer der Feinheit 5 - 25 µm (PHOENIX PX 2261, Fa. Eckart) wurden in 300 ml Isopropanol suspendiert und auf Siedetemperatur gebracht. Unter Rühren gab man zunächst 2,0 g H₂O und anschließend innerhalb einer Stunde eine Lösung aus 2,17 g Ce(NO₃)₃ in 100 g Isopropanol hinzu. Anschließend wurde eine Lösung von 0,45 g Ethylendiamin in 3,0 g H₂O hinzugegeben. Danach leitete man über einen Zeitraum von 2h 10,6 g Tetraethoxysilan und 22 g Isopropanol mit einer Dosierpumpe (Ismatec) kontinuierlich ein. Anschließend ließ man die Suspension noch 6 h lang weiter reagieren. Dann gab man 0,4 g Dynasylan AMEO und 1,3 g Dynasylan 9116 hinzu und ließ langsam abkühlen. Das Gemisch wurde über Nacht bei Raumtemperatur gerührt und am nächsten Tag abgenutscht. Der Pigmentfilterkuchen wurde anschließend bei 80°C unter Vakuum getrocknet.
Das Pigment hatte einen theoretischen Ce-Gehalt von 0,7 Gew.-% und einen SiO₂-Gehalt von 3,0 Gew.-%.

### Beispiel 2:

100g kommerziell erhältliches, blaues Perlglanzpigment auf Basis von TiO₂ beschichtetem Glimmer der Feinheit 5 - 25 µm (PHOENIX PX 2261, Fa Eckart) wurde in 900 g Wasser suspendiert. Anschließend wurde bei einem pH-Wert von 2,4 eine Lösung von 2.30 g SnCl₄*5H₂O in 45 ml verdünnter Salzsäure mit einer Geschwindigkeit von 2 ml/min zudosiert, wobei der pH-Wert durch gleichzeitiges Zutropfen von 20%iger Natronlauge konstant gehalten wurde. Nach 30 min Nachrühren wurde der Feststoff abfiltriert, mit Wasser gewaschen und bei 120 °C getrocknet.
Das trockene, beschichtete Pigment wurde in 300 ml Isopropanol suspendiert und auf Siedetemperatur gebracht. Unter Rühren gab man zunächst 2,0 g H₂O und anschließend innerhalb einer Stunde eine Lösung aus 2,17 g Ce(NO₃)₃ x 6H₂O in 100 g Isopropanol hinzu. Anschließend wurde eine Lösung von 0,45 g Ethylendiamin in 8 g H₂O hinzugegeben. Danach leitete man über einen Zeitraum von 2h 14,6 g Tetraethoxysilan und 20 g Isopropanol mit einer Dosierpumpe (Ismatec) kontinuierlich ein. Anschließend ließ man die Suspension noch 6 h lang weiter reagieren. Dann gab man 0,4 g Dynasylan AMEO und 1,3 g Dynasylan 9116 hinzu und ließ langsam abkühlen. Das Gemisch wurdeüber Nacht bei Raumtemperatur gerührt und am nächsten Tag abgenutscht. Der Pigmentfilterkuchen wurde anschließend 6 h lang bei 100°C unter Vakuum getrocknet.
Das Pigment hatte einen theoretischen SnO₂-Gehalt von 1,0 %, einen Cer-Gehalt von 0,7 und einen SiO₂- Gehalt von 4,2 Gew.-%.

### Vergleichsbeispiel 3:

Kommerziell erhältliches Exterior CFS Mearlin Super Blue 6303Z (10 - 40 µm) der Fa. Engelhard, USA.

### Vergleichsbeispiel 4:

Hergestellt wie Beispiel 1, jedoch wurde kein Aminosilan eingesetzt. Die Nachbeschichtung erfolgte nur mit 1,3g Dynasylan 9116.

Die erfindungsgemäßen Beispiele und die Vergleichsbeispiele wurden verschiedenen Tests zur Wetterstabilität und zur UV-Stabilität unterzogen. Nachfolgend sind die Testmethoden beschrieben und die Ergebnisse aufgeführt.

### A Schwitzwassertest

Einige Pigmentproben wurden in ein Wasserlacksystem eingearbeitet und die Prüfapplikationen durch Spritzlackierung hergestellt. Der Basislack wurde mit einem handelsüblichen 1 K-Klarlack überlackiert und anschließend eingebrannt. Diese Applikationen wurden nach DIN 50 017 (Kondenswasser-Konstantklimate) geprüft. Die Haftfestigkeit wurde mittels Gitterschnitt nach DIN EN ISO 2409 sofort nach Testende und eine Stunde später im Vergleich zur unbelasteten Probe geprüft. Hierbei bedeutet Gt 0 keine Veränderung und Gt 5 eine sehr starke Veränderung. Das Quellverhalten wurde unmittelbar nach Schwitzwasserbelastung in Anlehnung an die DIN 53230 visuell beurteilt. Hierbei bedeutet die Kennzahl 0: keine Veränderung und die Kennzahl 5: sehr starke Veränderung.
Der Blasengrad wurde visuell nach DIN 53209 beurteilt. Auch hier reicht die relative Bewertungsskala von 0 ("sehr gut") bis 5 ("sehr schlecht"). Mit "m" bezeichnet man die Häufigkeit und mit "g" die Größe der Blasen.
Schließlich wurde der DOI (distinctness of image) visuell beurteilt. Er kann sich im Wesentlichen aufgrund der Quellvorgänge durch Wassereinlagerung verändern.

**Tab. 1: Schwitzwasser und Gitterschnittprüfungen**

| **Probe** | **Gitterschnitt** | | | **Blasengrad** | **Quellung** | **DOI** | |
|---|---|---|---|---|---|---|---|
| | 0-Muster | 0 h | 1 h | | | 0 h | 1 h |
| Beispiel 1 | Gt 0 | Gt 0 | Gt 0 | m1/g1 | 2 | 2 | 2 |
| Beispiel 2 | Gt 0 | Gt 0 | Gt 0 | m1/g1 | 2 | 2 | 2 |
| Vergl. Beispiel 3 | Gt 0 | Gt 0 | Gt 0 | m1/g1 | 2 | 2 | 1 |
| Vergl. Beispiel 4 | Gt 1 | Gt 3 | Gt 2 | m2/g3 | 2 | 2- | 2 |

Die erfindungsgemäßen Beispiele 1 und 2 sind mit dem Vergleichsbeispiel 3 aus dem Stand der Technik in jeder Hinsicht vergleichbar und bestehen den Schwitzwassertest. Das Vergleichsbeispiel 4, bei dem die Nachbeschichtung lediglich aus einem Alkylsilan (16 C-Atome) ohne eine funktionelle Gruppe, die an das Lacksystem anbindet, bestand, ist jedoch hinsichtlich seiner Haftfestigkeit im Gitterschnitt deutlich schlechter und besteht den Test nicht.
Daher wurden mit dieser Probe auch keine weiteren Belastungstests wie WOM-Test durchgeführt.

### B WOM-Test

Die Pigmentproben wurden in ein Wasserlacksystem eingearbeitet und die Prüfapplikationen durch Spritzlackierung hergestellt. Der Basislack wurde mit einem handelsüblichen Klarlack überlackiert und anschließend eingebrannt. Die beschleunigte Bewitterungsprüfung erfolgte nach SAE-J 1960 in einem Atlas Ci-65 A Xeno-Testgerät mit wassergekühltem 6.5 kW Xenonstrahler. Die Bestimmung der ΔE*-Werte sowie die Einstufung nach der Grauskala erfolgte jeweils relativ zur entsprechenden unbelasteten Probe.

### C UV-Beständigkeit an Rakelabzügen

Dieser Test wurde in Anlehnung an den in der EP 0 870 730 beschrieben UV-Schnelltest zur Bestimmung der photochemischen UV-Aktivität von TiO₂-Pigmenten durchgeführt.

Hierzu wurden 1.0 g des Perlglanzpigmentes in 9.0 g eines doppelbindungsreichen melaminhaltigen Lackes eindispergiert. Es wurden Rakelabzüge auf kartoniertem Papier angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 W/m²/nm) bestrahlt. Unmittelbar nach dem Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tab.2 dargestellt.

Im Test wird im Wesentlichen eine graublaue Verfärbung der TiO₂-Schicht des Perlglanzpigmentes in den Rakelabzügen aufgrund von unter UV-Lichteinfluß gebildeten Ti(III)-Zentren beobachtet. Bedingung hierfür ist, dass das Elektronenloch das TiO₂ räumlich verlassen hat und - etwa durch Reaktion mit olefinischen Doppelbindungen des Bindemittels - nicht unmittelbar wieder mit dem verbleibenden Elektron rekombinieren kann. Da eine melaminhaltige Lackschicht die Diffusion von Wasser(dampf) und Sauerstoff an die Pigmentoberfläche signifikant verlangsamt, findet eine Reoxidation der Titan(III)-Zentren deutlich verzögert statt, so dass die Vergrauung gemessen und der ΔE-Wert als Maß für die UV-Stabilität der Pigmente herangezogen werden kann. Ein größerer ΔE*-Zahlenwert der belasteten Probe relativ zum unbelasteten Rückstellmuster bedeutet somit eine geringere UV-Stabilität des untersuchten Pigments.

Bei Verwendung dieses Tests bei den erfindungsgemäßen Beispielen ist zu unterscheiden, ob Proben mit oder ohne organische Oberflächenmodifizierung (OFM) eingesetzt werden.

Mit einer organischen Oberflächenmodifizierung wird die Pigmentoberfläche zumindest teilweise vom reaktiven, ungesättigten Melaminsystem isoliert. Daher kann die zur Bildung der farbgebenden Ti(III)-Zentren zwingend erforderliche Redox-Reaktion nicht mit der gleichen Effizienz und Geschwindigkeit stattfinden wie im zuerst geschilderten Fall. Somit wird bei organisch oberflächenmodifizierten Pigmenten zwangsläufig eine weitaus geringere Verfärbung ermittelt. Dies bedeutet aber nicht, dass die UV-katalytische Aktivität in diesem Fall niedrig ist. Stets sind daher jedoch die ΔE*-Werte für ein nicht organisch modifiziertes erfindungsgemäßes Perlglanzpigment etwas höher als für die an der Oberfläche nachbehandelten Proben.

**Tabelle 2: WOM- und UV-Rakeltestergebnisse**

| | **WOM-Test** | | **UV-Test** | |
|---|---|---|---|---|
| **Probe** | **ΔE*** | **Grauskala** | **ΔE* (ohne OFM)** | **ΔE* (mit OFM)** |
| Beispiel 1 | | | 1,4 | 0,9 |
| 500h | 0,1 | 5 | | |
| 1000h | 0,2 | 5 | | |
| 2000h | 0,3 | 5 | | |
| 3000h | 0,3 | 4-5 | | |
| 4000h | 0,4 | 4-5 | | |
| Beispiel 2 | | | 1,4 | 1,1 |
| 500h | 0,2 | 5 | | |
| 1000h | 0,2 | 5 | | |
| 2000h | 0,3 | 5 | | |
| 3000h | 0,3 | 4 - 5 | | |
| 4000h | 0,3 | 4 - 5 | | |
| Vergleichsbeispiel 3 (Exterior CFS Mearlin Super Blue 6303Z) | | | - | 2,3 +/- 0,3 |
| 500h | 0,4 | 5 | | |
| 1000h | 0,5 | 5 | | |
| 2000h | 0,8 | 4 - 5 | | |
| 3000h | 0,8 | 4-5 | | |
| 4000h | 1,0 | 4 | | |

| | | | | |
|---|---|---|---|---|
| OFM: Oberflächenmodifizierung | | | | |

Vergleicht man die Farbänderungen ΔE* des WOM-Testes der blauen Pigmente der erfindungsgemäßen Beispiele 1 und 2 mit jenem den Stand der Technik repräsentierenden Vergleichsbeispiel 3 (Tab. 2), so erhält man niedrigere Werte und daher bessere Wetterbeständigkeiten. Vor allem die Lichtbeständigkeiten, die anhand des Rakeltestes ermittelt werden, sind deutlich besser.

Die erfindungsgemäßen Perlglanzpigmente vermögen daher die Wetter- und UV-Stabilität mit einer optimalen Schichtfolge von zuerst Ceroxid/-hydroxid und anschließend SiO₂ gegenüber Vergleichsbeispielen aus dem Stand der Technik zu verbessern.

### UV-Beständigkeit:

Zur näheren Untersuchung des Aufbaus der Oxidschicht und des Einflusses der SiO₂-Schichtdicke wurden weitere erfindungsgemäße Beispiele und Vergleichsbeispiele hergestellt und im Rakeltest hinsichtlich ihrer UV-Beständigkeit untersucht. Auf eine Nachbeschichtung wurde hier verzichtet, da diese den UV-Test verfälscht (s. oben).

### Beispiele 5 und 6:

100g kommerziell erhältliches, blaues Perlglanzpigment auf Basis von TiO₂ beschichtetem Glimmer der Feinheit 10-40 µm (PHOENIX PX 1261, Fa Eckart) wurden in 300 ml Isopropanol suspendiert und auf Siedetemperatur gebracht. Unter Rühren gab man zunächst 2,0 g H₂O und anschließend innerhalb einer Stunde eine Lösung aus 0,93 g Ce(NO₃)₃ x 6 H₂O in 8 g Isopropanol hinzu. Anschließend wurde eine Lösung von 0,45 g Ethylendiamin in 3,0 g H₂O hinzugegeben. Danach leitete man über einen Zeitraum von 2h eine bestimmte Menge Tetraethoxysilan (s. Tabelle 3) und 22 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend 6 h lang bei 100°C unter Vakuum getrocknet.
In analoger Weise wurden verschiedene Mengen SiO₂ abgeschieden (siehe Tabelle 3).

### Beispiele 7 und 8:

Zum Vergleich wurden auch verschiedene Schutzschichten mit variierendem SiO₂-Gehalt hergestellt, ohne dass zusätzlich Cersalze abgeschieden wurden.

### Beispiel 9:

Ebenfalls wurde ein Vergleichsbeispiel mit cerhaltiger Schutzschicht (0,3% Ce-Gehalt), ohne das zusätzlich SiO₂ abgeschieden wurde, hergestellt.

Von allen Beispielen wurden die ΔE*-Werte des oben beschriebenen UV-Beständigkeitstests an Rakelabzügen bestimmt. Die eingesetzten Chemikalienmengen, theoretische Schutzschichtkomponentengehalte und die ΔE*-Werte sind in Tabelle 3 dargestellt.

### Beispiel 10 und 11 (Mischschicht):

100g kommerziell erhältliches, blaues Perlglanzpigment auf Basis von TiO₂ beschichtetem Glimmer der Feinheit 10-40 µm (PHOENIX PX 1261, Fa. Eckart) wurden in 300 ml Isopropanol suspendiert und auf Siedetemperatur gebracht. Unter Rühren gab man zunächst 2,0 g H₂O und anschließend eine Lösung von 0,45 g Ethylendiamin in 3,0 g H₂O zu. Danach leitete man über einen Zeitraum von 2h gleichzeitig eine Lösung von Tetraethoxysilan (siehe Tabelle 3) in 100 g Isopropanol und eine Lösung 0,93 g Ce(NO₃)₃ x 6 H₂O in 100 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend bei 80°C unter Vakuum getrocknet.
In analoger Weise wurden verschiedene Mengen SiO₂ abgeschieden (siehe Tabelle 3).

### Vergleichsbeispiele 12 und 13:

Die Vergleichsbeispiele 12 und 13 wurden in Anlehnung an die für Bsp. 6 und 7 beschriebene Beschichtungsmethode dargestellt, wobei hier zunächst die Silikatverbindung und dann das Cersalz eingeleitet und gefällt wurde.

**Tabelle 3: UV- Rakeltestergebnisse**

| **Probe** | **Schicht 1** | **Schicht 2** | **Verwendete Menge Tetraethoxysilan** | **ΔE*** |
|---|---|---|---|---|
| Beispiel 5 | 0,3 % Ce | 1 % SiO₂ | 3,47 g | 1,5 |
| Beispiel 6 | 0,3 % Ce | 2 % SiO₂ | 6,94 g | 1,0 |
| Vergleichsbeispiel 7 | ---- | 1 % SiO₂ | 3,47 g | 5,8 |
| Vergleichsbeispiel 8 | --- | 2 % SiO₂ | 6,94 g | 3,1 |
| Vergleichsbeispiel 9 | 0,3 % Ce | ---- | - | 8,4 |
| Vergleichsbeispiel 10 | 0,3 % Ce/1% SiO₂ | - | 3,47 g | 3,1 |
| Vergleichsbeispiel 11 | 0,3 % Ce / 2 % SiO₂ | - | 6,94 g | 2,3 |
| Vergleichsbeispiel 12 | 1 % SiO₂ | 0,3 % Ce | 3,47 g | 6,0 |
| Vergleichsbeispiel 13 | 2 % SiO₂ | 0,3 % Ce | 6,94 g | 3,3 |

Tab. 3 ist klar zu entnehmen, dass eine Schichtfolge aus 1. Ceroxid und/oder Ceroxid-Hydrat und/oder Cerhydroxid und 2. SiO₂ die beste UV-Beständigkeit bringt. Nur mit SiO₂ sowie nur mit Ceroxid und/oder Ceroxid-Hydrat und/oder Cerhydroxid geschützte Perlglanzpigmente oder die Schichtenfolge 1. SiO₂, 2. Ceroxid und/oder Ceroxid-Hydrat und/oder Cerhydroxid haben vergleichsweise deutlich niedrigere Beständigkeiten. Ebenso weisen Mischschichten aus SiO₂ und Ceroxid und/oder Ceroxid-Hydrat und/oder Cerhydroxid eine geringere stabilisierende Wirkung auf. Diese Befunde sind ein deutlicher Hinweis auf die synergetischen Effekte einer kombinierten, nacheinander gefällten Cerhydroxid- und SiO₂-Beschichtung, die nur dann wirksam werden, wenn zunächst die Ceroxid und/oder Ceroxid-Hydrat und/oder Cerhydroxid und erst anschließend die Siliziumoxidschicht gefällt wird.

### Beispiel 14

Nachfolgend wurden die Glanzeigenschaften von gemäß Beispiel 1 mit einer Ceroxid-Schicht und einer SiO₂-Schicht beschichteten PHOENIX PX 2261 Perlglanzpigmenten mit nicht-nachbeschichteten PHOENIX PX 2261 Perlglanzpigmenten verglichen.

Hierzu wurden die PHOENIX PX 2261 Perlglanzpigmente mit einer Schicht aus Ceroxid und einer Schicht aus SiO₂ (siehe Beispiel 1) bzw. ohne Nachbeschichtung in ein handelsübliches NC-Lacksystem in einer Pigmentierungshöhe von 6 Gew.-%, bezogen auf das Gesamtgewicht des Lackes, eingearbeitet. Von den pigmentierten NC-Lacksystemen wurden Rakelabzüge mit einer Naßfilmdicke von 36 µm angefertigt. Die Rakelabzüge wurden dabei auf Prüfkarten mit schwarzer und weißer Fläche, erhältlich bei der Fa. BYK-Gardner, Deutschland, aufgebracht und für 30 Minuten bei 25°C getrocknet.

Die Glanzmessungen wurden mit einem micro-TRI-Gloss µ - Gerät der Fa. BYK-Gardner gemäß Herstellerangaben bei einer Meßgeometrie von 60°, bezogen auf die Vertikale, durchgeführt. Eine Meßgeometrie von 60° ist für den sogenannten "Mittelglanz" im Bereich von 10 bis 70 Glanzpunkten geeignet, wobei ein höherer Zahlenwert bei den Glanzpunkten bei einem höheren Glanz gemessen wird. Die Meßergebnisse sind in Tabelle 4 angegeben und stellen Mittelwerte aus jeweils fünf Einzelmessungen dar, wobei die Standardabweichung in der Klammer jeweils angegeben ist.

**Tabelle 4: Glanzwerte von beschichteten und unbeschichteten PHOENIX PX 2261**

| **Probe** | **60°-Glanz auf weißem Untergrund** | **60°-Glanz auf schwarzem Untergrund** |
|---|---|---|
| PHOENIX PX 2261 mit Ceroxid und SiO₂-Beschichtung und organischer Nachbeschichtung (Bsp. 1) | 21,4 (± 0,6) | 17,6 (± 0,1) |
| PHOENIX PX 2261 ohne Nachbeschichtung | 21,4 (± 0,3) | 17,1 (± 0,4) |

Tabelle 4 ist zu entnehmen, daß die Beschichtung von Perlglanzpigmenten mit einer Schicht aus Ceroxid und einer Schicht aus SiO₂, das einen niedrigen Brechungsindex aufweist, überraschenderweise zu keiner signifikanten Verschlechterung des Glanzes führt. Im Hinblick auf den niedrigen Brechungsindex von SiO₂ wäre zu erwarten gewesen, daß die mit SiO₂ beschichteten Perlglanzpigmente deutlich geringere Glanzeigenschaften aufweisen als die unbeschichteten PHOENIX PX 2261-Pigmente.

## Patentansprüche

1. Perlglanzpigment mit Metalloxid-haltigem, plättchenförmigen Substrat mit einer ersten und einer zweiten Schutzschicht, wobei das Metalloxid einen Brechungsindex von größer als 1,8 hat,
wobei auf dem plättchenförmigen Substrat eine erste Schutzschicht mit Ceroxid und/oder Ceroxid-Hydrat und/oder Cerhydroxid
und
eine zweite Schutzschicht aus SiO₂, auf die eine organisch-chemische Nachbeschichtung, umfassend wenigstens ein Silan mit wenigstens einer funktionellen Bindungsgruppe und wenigstens ein Silan ohne funktionelle Bindungsgruppe, aufgebracht ist, vorgesehen ist, wobei zwischen der ersten und der zweiten Schutzschicht Metalloxidschichten, die verschieden von Ceroxid und/oder Ceroxid-Hydrat und/oder Cerhydroxid und SiO₂ sind, angeordnet sein können.

2. Perlglanzpigment nach Anspruch 1,
**dadurch gekennzeichnet,**
**daß** die organisch-chemische Nachbeschichtung kovalent mit der SiO₂-Schicht verbunden ist.

3. Perlglanzpigment nach Anspruch 1 oder 2,
**dadurch gekennzeichnet,**
**daß** der SiO₂-Gehalt des Pigmentes 0,5 bis 8 Gew.-%, bezogen auf das Gesamtgewicht des Pigmentes, beträgt.

4. Perlglanzpigment nach einem der vorhergehenden Ansprüche,
**dadurch gekennzeichnet,**
**daß** das Silan ohne funktionelle Bindungsgruppe ein Alkylsilan ist, das vorzugsweise unter Verwendung eines Alkylsilans mit der Formel R(_{4-z})Si(X)_{z} aufgebracht ist, wobei R eine substituierte oder unsubstituierte, unverzweigte oder verzweigte Alkylkette mit 10 bis 22 C-Atomen ist, X für eine Halogen- und/oder Alkoxygruppen steht und z eine ganze Zahl von 1 bis 3 ist.

5. Perlglanzpigment nach einem der Ansprüche 1 bis 3,
**dadurch gekennzeichnet,**
**daß** das Silan ohne funktionelle Bindungsgruppe die Strukturformel (II)
(R¹-X-[A -Y]ₙ-B)(_{4-z})Si(OR²)_{z} (II)
aufweist, wobei
- n = 1 bis 100 ist,
- z eine ganze Zahl von 1 bis 3 ist,
- R¹ für gerad- oder verzweigtkettiges Alkyl mit 1 bis 12 Kohlenstoffatomen, das mit Halogenen substituiert sein kann; Aryl mit 6 bis 12 C-Atomen; oder Aryl mit 6 bis 12 C-Atomen, das mit Alkyl mit 1 bis 6 Kohlenstoffatomen und/oder mit Halogenen substituiert sein kann; steht,
- R² für gerad- oder verzweigtkettiges Alkyl mit 1 bis 6 Kohlenstoffatomen steht
- A und B unabhängig voneinander für eine zweiwertige Gruppe, die aus gerad- oder verzweigtkettigern Alkylen mit 1 bis 12 Kohlenstoffatomen; Arylen mit 6 bis 12 C-Atomen; oder Arylen mit 6 bis 12 C-Atomen, das mit Alkyl mit 1 bis 6 Kohlenstoffatomen und/oder mit Halogenen substituiert sein kann; besteht, stehen und
X und Y unabhängig voneinander für O oder S stehen.

6. Perlglanzpigment nach Anspruch 5,
**dadurch gekennzeichnet,**
**daß** R¹ und R² unabhängig voneinander aus der Gruppe ausgewählt werden, die aus Methyl, Ethyl, n-Propyl, iso-Propyl, n-Butyl, iso-Butyl, tert.-Butyl, Phenyl, Biphenyl, Naphtyl und Mischungen davon besteht.

7. Perlglanzpigment nach einem der Ansprüche 5 oder 6,
**dadurch gekennzeichnet,**
**daß** A und B unabhängig voneinander aus der Gruppe ausgewählt werden, die aus Ethylen, Propylen, 1-Butylen, 2-Butylen, Phenylen, Phenylen, das mit Alkyl mit 1 bis 6 C-Atomen substituiert ist, und Mischungen davon besteht.

8. Perlglanzpigment nach einem der Ansprüche 5 bis 7,
**dadurch gekennzeichnet,**
**daß** die Silane in reiner Form mit definiertem n oder in Mischungen mit verschiedenen n vorliegen können.

9. Perlglanzpigment nach einem der vorherigen Ansprüche,
**dadurch gekennzeichnet,**
**daß** die wenigstens eine funktionelle Bindungsgruppe aus der Gruppe, die aus Acrylat-, Methacrylat-, Vinyl-, Amino-, Cyanat, lsocyanat, Epoxy-, Hydroxy- Thiol-, Ureido-, Carboxylgruppen und Mischungen davon besteht, ausgewählt wird.

10. Perlglanzpigment nach einem der vorherigen Ansprüche,
**dadurch gekennzeichnet,**
**daß** das Silan mit wenigstens einer funktionellen Bindungsgruppe ein Aminosilan ist.

11. Perlglanzpigment nach einem der vorherigen Ansprüche,
**dadurch gekennzeichnet,**
**daß** der Anteil von Cer 0,05 bis 3,0 Gew.%, vorzugsweise 0,1 bis 1,0 Gew.-%, jeweils bezogen auf das Gesamtgewicht des Pigmentes, beträgt.

12. Perlglanzpigment nach einem der vorherigen Ansprüche,
**dadurch gekennzeichnet,**
**daß** der Anteil der organisch-chemischen Nachbeschichtung zwischen 0,1 und 6 Gew.-%, vorzugsweise zwischen 0,2 und 5 Gew.-%, bezogen auf das Gesamtgewicht des Pigmentes, liegt.

13. Perlglanzpigment nach einem der vorherigen Ansprüche,
**dadurch gekennzeichnet,**
**daß** die erste Schutzschicht mit Ceroxid und/oder Ceroxidhydrat und/oder Cerhydroxid ferner SiO₂ enthalten kann.

14. Perlglanzpigment nach einem der Ansprüche 1 bis 12,
**dadurch gekennzeichnet,**
**daß** die erste Schutzschicht aus Ceroxid und/oder Ceroxidhydrat und/oder Cerhydroxid besteht.

15. Perlglanzpigment nach einem der vorherigen Ansprüche,
**dadurch gekennzeichnet,**
**daß** das plättchenförmige Substrat eine oder mehrere Metalloxidschichten, vorzugsweise eine oder mehrere Schichten aus Zinnoxid, aufweist, wobei das mit der einen oder mehreren Metalloxidschichten beschichtete plättchenförmige Substrat vorzugsweise calciniert ist.

16. Perlglanzpigment nach einem der vorherigen Ansprüche,
**dadurch gekennzeichnet,**
**daß** zwischen der ersten Schutzschicht mit Ceroxid und/oder Ceroxid-Hydrat und/oder Cerhydroxid und der zweiten Schutzschicht aus SiO₂ weitere Schichten, vorzugsweise Metalloxidschichten, angeordnet sind.

17. Perlglanzpigment nach einem der vorherigen Ansprüche,
**dadurch gekennzeichnet,**
**daß** das plättchenförmige Substrat aus der Gruppe, die aus
TiO₂ und/oder Eisenoxid beschichteten Glimmerplättchen,
TiO₂ und/oder Eisenoxid beschichteten Glasplättchen,
TiO₂ und/oder Eisenoxid beschichteten Aluminiumoxidplättchen,
TiO₂ und/oder Eisenoxid beschichteten SiO₂-Plättchen,
Bismutoxychloridplättchen,
reinen TiO₂-Plättchen und
Mischungen davon
besteht, ausgewählt wird.

18. Perlglanzpigment nach einem der vorherigen Ansprüche,
**dadurch gekennzeichnet, daß** das Substrat eine Schicht aus TiO₂ umfaßt oder ist.

19. Verfahren zur Herstellung eines Perlglanzpigmentes nach einem der Ansprüche 1 bis 18, das die folgenden Schritte umfasst:
(a) Suspendieren von Metalloxid-haltigem, plättchenförmigen Substrat in einer Flüssigphase, wobei das Metalloxid einen Brechungsindex von größer als 1,8 hat,
(b) Aufbringen einer Schicht mit Ceroxid und/oder Ceroxid-Hydrat und/oder Cerhydroxid auf das plättchenförmige Substrat,
(c) optionales Aufbringen einer oder mehrerer Metalloxidschichten auf das in Schritt (b) beschichtete Pigment,
(d) Aufbringen einer SiO₂-Schicht auf das in Schritt (b) oder Schritt (c) beschichtete Pigment,
(e) Modifizieren der Oberfläche der SiO₂-Schicht mit einer Nachbeschichtung umfassend wenigstens ein Silan mit wenigstens einer funktionellen Bindungsgruppe und wenigstens ein Silan ohne funktionelle Bindungsgruppe.

20. Verfahren nach Anspruch 19,
**dadurch gekennzeichnet,**
**daß** in Schritt (a) die Flüssigphase einen überwiegenden Anteil an organischem Lösemittel, das vorzugsweise weniger als 50 Gew.-% Wasser enthält, enthält.

21. Verfahren nach Anspruch 19 oder 20,
**dadurch gekennzeichnet,**
**daß** in Schritt (b) die Schicht mit Ceroxid und/oder Cerhydroxid unter Verwendung von in organischem Lösemittel löslichen Cerverbindungen, vorzugsweise von Cer(III)acetat, Cer(III)octoat, Cer(III)acetylacetonat, Cer(III)nitrat, Cer(III)chlorid oder Cer(IV)ammoniumnitrat oder Mischungen davon, unter optionaler Zugabe von Wasser und optionaler Zugabe von Base oder Säure aufgebracht wird.

22. Verfahren nach einem der Ansprüche 19 bis 21,
**dadurch gekennzeichnet,**
**daß** in Schritt (d) die SiO₂-Schicht unter Zugabe von Tetraalkoxysilan zu dem in Schritt (b) oder (c) beschichteten Pigment unter optionaler Zugabe von Wasser aufgebracht wird.

23. Verfahren nach Anspruch 22,
**dadurch gekennzeichnet,**
**daß** das Tetraalkoxysilan aus der Gruppe, die aus Tetramethoxysilan, Tetraethoxysilan, Tetraisopropoxysilan, Tetrabutoxysilan und Mischungen davon besteht, ausgewählt wird.

24. Verfahren nach einem der Ansprüche 19 bis 23,
**dadurch gekennzeichnet,**
**daß** in Schritt (b) und/oder (d) zusätzlich stickstoffhaltige Basen zugegeben werden

25. Verfahren nach einem der Ansprüche 19 bis 24,
**dadurch gekennzeichnet,**
**daß** in Schritt (e) die SiO₂-Schicht in einer Flüssigphase mit einem überwiegenden Anteil an organischem Lösemittel organisch-chemisch oberflächenmodifiziert wird.

26. Verfahren nach Anspruch 19,
**dadurch gekennzeichnet,**
**daß** in Schritt (d) die in Schritt (b) oder Schritt (c) beschichteten Pigmente in Wasser oder in überwiegend wässrigem Medium suspendiert werden und die SiO₂-Schicht unter Verwendung von wässrigen Silikatlösungen wie Wasserglas aufgebracht wird.

27. Verfahren nach Anspruch 26,
**dadurch gekennzeichnet,**
**daß** die mit einer SiO₂-Schicht beschichteten Pigmente in einer Flüssigphase mit überwiegendem Anteil an organischem Lösemittel aufgenommen und nachfolgend organisch-chemisch oberflächenmodifiziert werden.

28. Verfahren nach einem der vorhergehenden Ansprüche 19 bis 25 und 27,
**dadurch gekennzeichnet,**
**daß** das organische Lösemittel Essigester, Alkohole, wie Methanol, Ethanol, n-Propanol, iso-Propanol, n-Butanol, 2-Methylpropanol, 2-Methoxypropanol, Butylglycol oder Mischungen davon ist.

29. Verfahren nach einem der vorhergehenden Ansprüche 19 bis 28,
**dadurch gekennzeichnet,**
**daß** das wenigsten eine Silan mit wenigstens einer funktionellen Bindungsgruppe ein Monomer ist.

30. Verfahren nach einem der vorhergehenden Ansprüche 19 bis 29,
**dadurch gekennzeichnet,**
**daß** das wenigsten eine Silan mit wenigstens einer funktionellen Bindungsgruppe ein zu nicht mehr als 50 % vorhydrolysiertes Silan, vorzugsweise ein nichtvorhydrolysiertes Silan, ist.

31. Verwendung eines Perlglanzpigmentes nach einem der Ansprüche 1 bis 18 in Coatings, Lacken, Pulverlacken, Druckfarben, Kunststoffen und kosmetischen Zubereitungen.

32. Verwendung eines Perlglanzpigmentes nach einem der Ansprüche 1 bis 18 in bewitterungsstabilen Automobillacken sowie Pulverlacken und Coatings für bewitterungsstabile Außen- und Fassadenanwendungen.

33. Gegenstand,
**dadurch gekennzeichnet,**
**daß** der Gegenstand mit einer Beschichtung, die Perlglanzpigment nach einem der Ansprüche 1 bis 18 enthält, versehen ist.

34. Gegenstand nach Anspruch 33,
**dadurch gekennzeichnet,**
**daß** der Gegenstand eine Fahrzeugkarosserie oder eine Fassade ist.

## Claims

1. Pearlescent pigment with a platelet-shaped substrate comprising metal oxide and having a first and a second protective layer, said metal oxide having a refractive index of greater than 1.8,
there being on the platelet-shaped substrate a first protective layer comprising cerium oxide and/or cerium oxide hydrate and/or cerium hydroxide
and
a second protective layer of SiO₂, applied to which is an organic chemical aftercoat comprising at least one silane having at least one functional bond group and at least one silane without a functional bond group, it being possible for metal oxide layers other than cerium oxide and/or cerium oxide hydrate and/or cerium hydroxide and SiO₂ to be disposed between the first and the second protective layer.

2. Pearlescent pigment according to Claim 1,
**characterized in that**
the organic chemical aftercoat is joined covalently to the SiO₂ layer.

3. Pearlescent pigment according to Claim 1 or 2,
**characterized in that**
the SiO₂ content of the pigment is 0.5% to 8% by weight, based on the total weight of the pigment.

4. Pearlescent pigment according to any one of the preceding claims,
**characterized in that**
the silane without a functional bond group is an alkylsilane applied preferably using an alkylsilane having the formula R_{(4-z)}Si(X)_{z}, R being a substituted or unsubstituted, unbranched or branched alkyl chain having 10 to 22 carbon atoms, X being a halogen group and/or alkoxy groups and z being an integer from 1 to 3.

5. Pearlescent pigment according to any one of Claims 1 to 3,
**characterized in that**
the silane without a functional bond group has the structural formula (II)
(R¹-X- [A-Y]ₙ-B)_{(4-z)}Si (OR²)_{z} (II)
where
- n =1 to 100,
- z is an integer from 1 to 3,
- R¹ is straight- or branched-chain alkyl having 1 to 12 carbon atoms, which may be substituted by halogens; is aryl having 6 to 12 carbon atoms; or is aryl having 6 to 12 carbon atoms, which may be substituted by alkyl having 1 to 6 carbon atoms and/or by halogens;
- R² is straight- or branched-chain alkyl having 1 to 6 carbon atoms;
- A and B independently of one another are a divalent group consisting of straight- or branched-chain alkylene having 1 to 12 carbon atoms; arylene having 6 to 12 carbon atoms; or arylene having 6 to 12 carbon atoms, which may be substituted by alkyl having 1 to 6 carbon atoms and/or by halogens; and
X and Y independently of one another are 0 or S.

6. Pearlescent pigment according to Claim 5,
**characterized in that**
R¹ and R² are selected independently of one another from the group consisting of methyl, ethyl, n-propyl, isopropyl, n-butyl, isobutyl, tert-butyl, phenyl, biphenylyl, naphthyl, and mixtures thereof.

7. Pearlescent pigment according to either of Claims 5 and 6,
**characterized in that**
A and B are selected independently of one another from the group consisting of ethylene, propylene, 1-butylene, 2-butylene, phenylene, phenylene substituted by alkyl having 1 to 6 carbon atoms, and mixtures thereof.

8. Pearlescent pigment according to any one of Claims 5 to 7,
**characterized in that**
the silanes may be present in pure form with a defined n or in mixtures with different n.

9. Pearlescent pigment according to any of the preceding claims,
**characterized in that**
the at least one functional bond group is selected from the group consisting of acrylate, methacrylate, vinyl, amino, cyanate, isocyanate, epoxy, hydroxyl, thiol, ureido, and carboxyl groups and mixtures thereof.

10. Pearlescent pigment according to any one of the preceding claims,
**characterized in that**
the silane having at least one functional bond group is an aminosilane.

11. Pearlescent pigment according to any one of the preceding claims,
**characterized in that**
the fraction of cerium is 0.05% to 3.0%, preferably 0.1% to 1.0%, by weight, based in each case on the total weight of the pigment.

12. Pearlescent pigment according to any one of the preceding claims,
**characterized in that**
the fraction of the organic chemical aftercoat is between 0.1% and 6%, preferably between 0.2% and 5%, by weight, based on the total weight of the pigment.

13. Pearlescent pigment according to any one of the preceding claims,
**characterized in that**
the first protective layer comprising cerium oxide and/or cerium oxide hydrate and/or cerium hydroxide may further comprise SiO₂.

14. Pearlescent pigment according to any one of Claims 1 to 12,
**characterized in that**
the first protective layer is composed of cerium oxide and/or cerium oxide hydrate and/or cerium hydroxide.

15. Pearlescent pigment according to any one of the preceding claims,
**characterized in that**
the platelet-shaped substrate comprises one or more metal oxide layers, preferably one or more layers of tin oxide, the platelet-shaped substrate coated with the one or more metal oxide layers being preferably calcined.

16. Pearlescent pigment according to any one of the preceding claims,
**characterized in that**
disposed between the first protective layer comprising cerium oxide and/or cerium oxide hydrate and/or cerium hydroxide and the second protective layer of SiO₂ there are disposed further layers, preferably metal oxide layers.

17. Pearlescent pigment according to any one of the preceding claims,
**characterized in that**
the platelet-shaped substrate is selected from the group consisting of
TiO₂ and/or iron oxide coated mica flakes,
TiO₂ and/or iron oxide coated glass flakes,
TiO₂ and/or iron oxide coated alumina flakes,
TiO₂ and/or iron oxide coated SiO₂ flakes,
bismuth oxychloride flakes,
pure TiO₂ flakes, and
mixtures thereof.

18. Pearlescent pigment according to any one of the preceding claims,
**characterized in that**
the substrate is or comprises a layer of TiO₂.

19. Process for preparing a pearlescent pigment according to any one of Claims 1 to 18, comprising the following steps:
(a) suspending platelet-shaped substrate comprising metal oxide in a liquid phase, said metal oxide having a refractive index of greater than 1.8,
(b) applying a layer comprising cerium oxide and/or cerium oxide hydrate and/or cerium hydroxide to said platelet-shaped substrate,
(c) optionally applying one or more metal oxide layers to the pigment coated in step (b),
(d) applying an Si02 layer to the pigment coated in step (b) or step (c),
(e) modifying the surface of the SiO₂ layer with an aftercoat comprising at least one silane having at least one functional bond group and at least one silane without a functional bond group.

20. Process according to Claim 19,
**characterized in that**
the liquid phase in step (a) comprises a predominant fraction of organic solvent containing preferably less than 50% by weight of water.

21. Process according to Claim 19 or 20,
**characterized in that**
the layer comprising cerium oxide and/or cerium hydroxide in step (b) is applied using cerium compounds that are soluble in organic solvent, preferably cerium(III) acetate, cerium(III) octoate, cerium(III) acetylacetonate, cerium(III) nitrate, cerium(III) chloride or cerium (IV) ammonium nitrate or mixtures thereof, with optional addition of water and optional addition of base or acid.

22. Process according to any one of Claims 19 to 21,
**characterized in that**
the SiO₂ layer in step (d) is applied with addition of tetraalkoxysilane to the pigment coated in step (b) or (c), with optional addition of water.

23. Process according to Claim 22,
**characterized in that**
the tetraalkoxysilane is selected from the group consisting of tetramethoxysilane, tetraethoxysilane, tetraisopropoxysilane, tetrabutoxysilane, and mixtures thereof.

24. Process according to any one of Claims 19 to 23,
**characterized in that**
additionally in step (b) and/or (d) nitrogen-containing bases are added.

25. Process according to any one of Claims 19 to 24,
**characterized in that**
the SiO₂ layer in step (e) is subjected to organic chemical surface modification in a liquid phase having a predominant fraction of organic solvent.

26. Process according to Claim 19,
**characterized in that**
the pigments coated in step (b) or step (c) are suspended in step (d) in water or in a predominantly aqueous medium and the SiO₂ layer is applied using aqueous silicate solutions such as waterglass.

27. Process according to Claim 26,
**characterized in that**
the pigments coated with an SiO₂ layer are taken up in a liquid phase having a predominant fraction of organic solvent and are subsequently subjected to organic chemical surface modification.

28. Process according to any one of the preceding Claims 19 to 25 and 27,
**characterized in that**
the organic solvent is ethyl acetate, alcohols, such as methanol, ethanol, n-propanol, isopropanol, n-butanol, 2-methylpropanol, 2-methoxypropanol or butyl glycol, or mixtures thereof.

29. Process according to any one of the preceding Claims 19 to 28,
**characterized in that**
at least one silane having at least one functional bond group is a monomer.

30. Process according to any one of the preceding Claims 19 to 29,
**characterized in that**
at least one silane having at least one functional bond group is a silane which has been prehydrolyzed to an extent of not more than 50%, preferably a non-prehydrolyzed silane.

31. Use of a pearlescent pigment according to any one of Claims 1 to 18 in coatings, varnishes, powder coatings, printing inks, plastics, and cosmetic preparations.

32. Use of a pearlescent pigment according to any one of Claims 1 to 18 in weathering-stable automotive finishes and in powder coatings and coatings for weathering-stable exterior and facing applications.

33. Article
**characterized in that**
it is provided with a coating comprising pearlescent pigment according to any one of Claims 1 to 18.

34. Article according to Claim 33,
**characterized in that**
it is a vehicle body or an architectural facing.

## Revendications

1. Pigment nacré avec un substrat lamellaire contenant de l'oxyde métallique ayant une première et une deuxième couche protectrice, où l'oxyde métallique a un indice de réfraction de plus de 1,8,
où l'on prévoit, sur le substrat lamellaire, une première couche protectrice d'oxyde de cérium et/ou d'hydrate d'oxyde de cérium et/ou d'hydroxyde de cérium
et
une deuxième couche protectrice en SiO₂, sur laquelle est déposé un revêtement ultérieur organochimique, comprenant au moins un silane ayant au moins un groupe de liaison fonctionnel et au moins un silane sans groupe de liaison fonctionnel, où des couches d'oxyde métallique, qui sont différentes de l'oxyde de cérium et/ou de l'hydrate d'oxyde de cérium et/ou de l'hydroxyde de cérium et du SiO₂, peuvent être disposées entre la première et la deuxième couche protectrice.

2. Pigment nacré selon la revendication 1, **caractérisé en ce que** le revêtement ultérieur organochimique est lié de manière covalente avec la couche de SiO₂.

3. Pigment nacré selon la revendication 1 ou 2, **caractérisé en ce que** la teneur en SiO₂ du pigment est de 0,5 à 8 % en poids, par rapport au poids total du pigment.

4. Pigment nacré selon l'une des revendications précédentes, **caractérisé en ce que** le silane sans groupe de liaison fonctionnel est un alkylsilane, qui est déposé de préférence en utilisant un alkylsilane de formule R(_{4-z})Si(X)_{z}, où R représente une chaîne alkyle substituée ou non substituée, linéaire ou ramifiée, ayant de 10 à 22 atomes de C, X représente un groupe halogène et/ou alcoxy et z représente un nombre entier de 1 à 3.

5. Pigment nacré selon l'une des revendications 1 à 3, **caractérisé en ce que** le silane sans groupe de liaison fonctionnel présente la formule structurelle (II)
(R¹-X-[A-y]ₙ-B)_{(4-z)}Si(OR²)_{z} (II)
dans laquelle
- n=1 à 100,
- z représente un nombre entier de 1 à 3,
- R¹ représente un alkyle à chaîne linéaire ou ramifiée ayant de 1 à 12 atomes de carbone, pouvant être substituée par des halogènes ; un aryle ayant de 6 à 12 atomes de C ; ou un aryle ayant de 6 à 12 atomes de C, pouvant être substitué par un alkyle ayant de 1 à 6 atomes de carbone et/ou par des halogènes ;
- R² représente un alkyle linéaire ou ramifié ayant de 1 à 6 atomes de carbone
- A et B représentent indépendamment l'un de l'autre un groupe divalent, qui se compose d'un alkylène à chaîne linéaire ou ramifiée ayant de 1 à 12 atomes de carbone ; d'un arylène ayant de 6 à 12 atomes de C ; ou d'un arylène ayant de 6 à 12 atomes de C, pouvant être substitué par un alkyle ayant de 1 à 6 atomes de carbone et/ou des halogènes ; et
- X et Y représentent, indépendamment l'un de l'autre, O ou S.

6. Pigment nacré selon la revendication 5, **caractérisé en ce que** R¹ et R² sont choisis, indépendamment l'un de l'autre, dans le groupe constitué par le méthyle, l'éthyle, le n-propyle, l'isopropryle, le n-butyle, l'isobutyle, le tert.-butyle, le phényle, le biphényle, le naphtyle et leurs mélanges.

7. Pigment nacré selon l'une des revendications 5 ou 6, **caractérisé en ce que** A et B sont choisis, indépendamment l'un de l'autre, dans le groupe constitué par l'éthylène, le propylène, le 1-butylène, le 2-butylène, le phénylène, qui est substitué par un alkyle ayant de 1 à 6 atomes de C et leurs mélanges.

8. Pigment nacré selon l'une des revendications 5 à 7, **caractérisé en ce que** les silanes peuvent se présenter sous forme pure avec un n défini ou en mélanges avec différents n.

9. Pigment nacré selon l'une des revendications précédentes, **caractérisé en ce que** le ou les groupes fonctionnels sont choisis dans le groupe constitué des groupes acrylate, méthacrylate, vinyle, amino, cyanate, isocyanate, époxy, hydroxy, thiol, uréido, carboxyle et leurs mélanges.

10. Pigment nacré selon l'une des revendications précédentes, **caractérisé en ce que** le silane ayant au moins un groupe de liaison fonctionnel est un aminosilane.

11. Pigment nacré selon l'une des revendications précédentes, **caractérisé en ce que** la proportion de cérium est de 0,05 à 3,0 % en poids, de préférence de 0,1 à 1,0 % en poids, à chaque fois par rapport au poids total du pigment.

12. Pigment nacré selon l'une des revendications précédentes, **caractérisé en ce que** la proportion de revêtement ultérieur organochimique se situe entre 0,1 et 6 % en poids, de préférence entre 0,2 et 5 % en poids, par rapport au poids total du pigment.

13. Pigment nacré selon l'une des revendications précédentes, **caractérisé en ce que** la première couche protectrice d'oxyde de cérium et/ou d'hydrate d'oxyde de cérium et/ou d'hydroxyde de cérium peut contenir en plus du SiO₂.

14. Pigment nacré selon l'une des revendications 1 à 12, **caractérisé en ce que** la première couche protectrice se compose d'oxyde de cérium et/ou d'hydrate d'oxyde de cérium et/ou d'hydroxyde de cérium.

15. Pigment nacré selon l'une des revendications précédentes, **caractérisé en ce que** le substrat lamellaire présente une ou plusieurs couches d'oxyde métallique, de préférence une ou plusieurs couches d'oxyde d'étain, où le substrat lamellaire revêtu d'une ou de plusieurs couches d'oxyde métallique est de préférence calciné.

16. Pigment nacré selon l'une des revendications précédentes, **caractérisé en ce que** d'autres couches, de préférence des couches d'oxyde métallique, sont disposées entre la première couche protectrice d'oxyde de cérium et/ou d'hydrate d'oxyde de cérium et/ou d'hydroxyde de cérium et la deuxième couche protectrice de SiO₂.

17. Pigment nacré selon l'une des revendications précédentes, **caractérisé en ce que** le substrat lamellaire est choisi dans le groupe constitué par les lamelles de mica revêtues de TiO₂ et/ou d'oxyde de fer, les lamelles de verre revêtues de TiO₂ et/ou d'oxyde de fer, les lamelles d'oxyde d'aluminium revêtues de TiO₂ et/ou d'oxyde de fer, les lamelles de SiO₂ revêtues de TiO₂ et/ou d'oxyde de fer, les lamelles d'oxychlorure de bismuth, les lamelles de TiO₂ pures et des mélanges de celles-ci.

18. Pigment nacré selon l'une des revendications précédentes, **caractérisé en ce que** le substrat comprend ou est une couche de TiO₂.

19. Procédé de fabrication d'un pigment nacré selon l'une des revendications 1 à 18, qui comprend les étapes suivantes :
(a) la suspension du substrat lamellaire contenant de l'oxyde métallique dans une phase liquide, l'oxyde métallique ayant un indice de réfraction de plus de 1,8,
(b) le dépôt d'une couche d'oxyde de cérium et/ou d'hydrate d'oxyde de cérium et/ou d'hydroxyde de cérium sur le substrat lamellaire,
(c) le dépôt éventuel d'une ou de plusieurs couches d'oxyde métallique sur le pigment revêtu à l'étape (b),
(d) le dépôt d'une couche de SiO₂ sur le pigment revêtu à l'étape (b) ou à l'étape (c),
(e) la modification de la surface de la couche de SiO₂ avec un revêtement ultérieur comprenant au moins un silane ayant au moins un groupe de liaison fonctionnel et au moins un silane sans groupe de liaison fonctionnel.

20. Procédé selon la revendication 19, **caractérisé en ce que**, à l'étape (a), la phase liquide comprend une proportion prépondérante d'un solvant organique, qui contient de préférence moins de 50 % en poids d'eau.

21. Procédé selon la revendication 19 ou 20, **caractérisé en ce que**, à l'étape (b), la couche d'oxyde de cérium et/ou d'hydroxyde de cérium est déposée en utilisant des composés de cérium solubles dans le solvant organique, de préférence l'acétate de cérium(III), l'octoate de cérium(III), l'acétylacétonate de cérium(III), le nitrate de cérium(III), le chlorure de cérium(III), ou le nitrate de cérium(IV)-ammonium ou leurs mélanges, sous addition éventuelle d'eau et addition éventuelle de base ou d'acide.

22. Procédé selon l'une des revendications 19 à 21, **caractérisé en ce que**, à l'étape (d), la couche de SiO₂ est déposée sous addition de tétraalcoxysilane au pigment revêtu à l'étape (b) ou (c) sous addition éventuelle d'eau.

23. Procédé selon la revendication 22, **caractérisé en ce que** le tétraalcoxysilane est choisi dans le groupe qui se compose du tétraméthoxysilane, tétraéthoxysilane, tétraiso-propoxysilane, tétrabutoxysilane et leurs mélanges.

24. Procédé selon l'une des revendications 19 à 23, **caractérisé en ce que**, à l'étape (b) et/ou (d), on ajoute en plus des bases azotées.

25. Procédé selon l'une des revendications 19 à 24, **caractérisé en ce que**, à l'étape (e), la couche de SiO₂ est modifiée en surface par voie organochimique dans une phase liquide avec une proportion prépondérante de solvant organique.

26. Procédé selon la revendication 19, **caractérisé en ce que**, à l'étape (d), les pigments revêtus à l'étape (b) ou à l'étape (c) sont suspendus dans l'eau
ou dans un milieu principalement aqueux et la couche de SiO₂ est déposée en utilisant des solutions aqueuses de silicate comme le verre soluble.

27. Procédé selon la revendication 26, **caractérisé en ce que** les pigments revêtus d'une couche de SiO₂ sont dilués dans une phase liquide avec une proportion prépondérante de solvant organique et sont ensuite modifiés en surface par voie organochimique.

28. Procédé selon l'une des revendications précédentes 19 à 25 et 27, **caractérisé en ce que** le solvant organique est les esters acétiques, les alcools comme le méthanol, l'éthanol, le n-propanol, l'isopropanol, le n-butanol, le 2-méthylpropanol, le 2-méthoxypropanol, le butylglycol ou leurs mélanges.

29. Procédé selon l'une des revendications précédentes 19 à 28, **caractérisé en ce que** le ou les silanes ayant au moins un groupe de liaison fonctionnel sont un monomère.

30. Procédé selon l'une des revendications précédentes 19 à 29, **caractérisé en ce que** le ou les silanes ayant au moins un groupe de liaison fonctionnel sont un silane préhydrolysé à pas plus de 50 %, de préférence un silane non préhydrolysé.

31. Utilisation d'un pigment nacré selon l'une des revendications 1 à 18 dans des revêtements, des laques, des laques pulvérulentes, des encres d'impression, des plastiques et des compositions cosmétiques.

32. Utilisation d'un pigment nacré selon l'une des revendications 1 à 18 dans des laques automobiles résistant aux intempéries et des laques pulvérulentes et revêtements pour des applications extérieures et de façades résistant aux intempéries.

33. Objet, **caractérisé en ce que** l'objet est doté d'un revêtement qui comprend le pigment nacré selon l'une des revendications 1 à 18.

34. Objet selon la revendication 33, **caractérisé en ce que** l'objet est une carrosserie de véhicule ou une façade.
